(19) Europäisches Patentamt
European Patent Office
Office européen des brevets

(11) **EP 2 442 454 A2**

(12) # EUROPEAN PATENT APPLICATION

(43) Date of publication:
**18.04.2012 Bulletin 2012/16**

(51) Int Cl.:
***H04B 1/711*** *(2011.01)* ***H04B 7/08*** *(2006.01)*
***H04J 13/00*** *(2011.01)*

(21) Application number: **11185171.3**

(22) Date of filing: **14.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.10.2010 KR 20100100514**
**14.10.2011 KR 20110104946**

(71) Applicant: **Electronics and Telecommunications Research Institute**
**Daejeon-si 305-700 (KR)**

(72) Inventor: **Kyeong, Mun-Geon**
**Daejeon-si, (KR)**

(74) Representative: **Betten & Resch**
**Patentanwälte**
**Theatinerstrasse 8**
**80333 München (DE)**

(54) **Continuous orthogonal spreading code based ultra-high performance array antenna system**

(57) Provided are a beamforming receiving/transmitting function and a beamforming receiving/transmitting structure, which are optimized for a given basic system in order to provide advanced performance in consideration of a wireless mobile communication system through a ultra-high performance CDMA array antenna based on continuously orthogonal spreading codes and a pre-rake scheme for non-interference communication. Also, there is provided a chip-level/symbol-level beamforming receiving/transmitting apparatus based on a multiple-input multiple-output (MIMO) system on a forward/backward link in order to be applied to various advanced wireless mobile communication applications by improving the performance and capacity of a Code Division Multiple Access (CDMA) array antenna system based on continuously orthogonal spreading codes and a pre-rake scheme for non-interference communication, and a forward and backward link automatic beamforming method. Accordingly, a ultra-high performance base station and terminal having no-interference reception performance as well as achieving high hardware and power efficiency may be realized.

FIG. 10

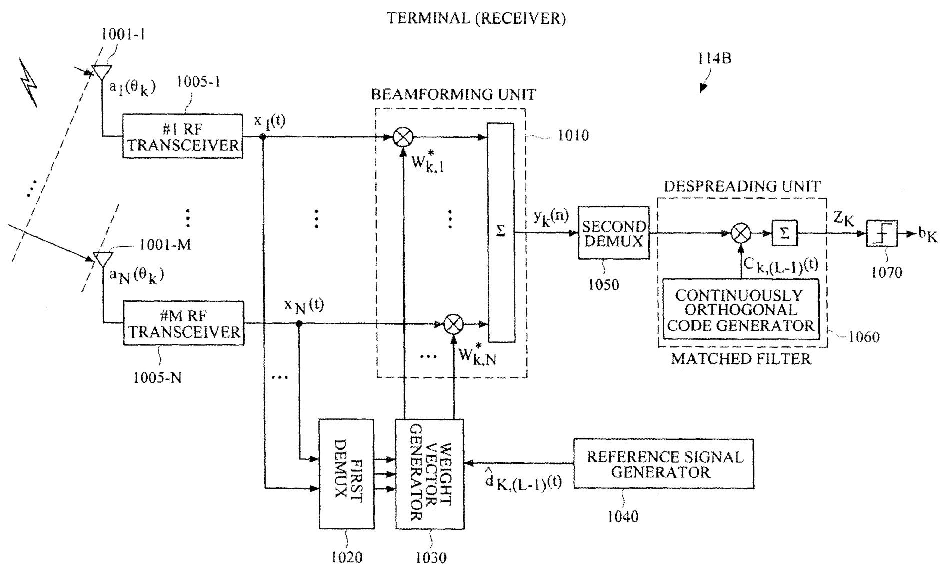




EP 2 442 454 A2

## Description

## CROSS-REFERENCE TO RELATED APPLICATION

This application claims the benefit under 35 U.S.C. §119(a) of Korean Patent Applications No. 10-2010-0100514, filed on October 14, 2010, and No. 10-2011-0104946, filed on October 14, 2011, the entire disclosures of which are incorporated herein by reference for all purposes.

## BACKGROUND

### 1. Field

The following description relates to a Code Division Multiple Access (CDMA) array antenna system for providing a forward and backward link automatic beamforming function using an array antenna in order to implement an adaptive beamforming system capable of improving the performance and capacity of a CDMA base station system based on continuously orthogonal spreading codes and a pre-rake scheme for non-interference communication and enhancing the performance of a terminal, and a forward and backward link automatic beamforming method.

### 2. Description of the Related Art

A conventional rake receiver needs L matched filters and L searchers for processing L multiple paths. A pre-rake system transmits signals through a pre-rake combiner based on channel information at a transmitter, and a receiver which receives the signals needs a matched filter for extracting a peak signal from the received signals. Such a pre-rake method can simplify the structure of a rake receiver compared to the existing rake receiver. However, L-path signals having a rake effect are diverged into (2L-1)-th path signals when passing through a channel, so that signals finally received by a receiver have double Multiple Access Interference (MAI) and Multi-Path Interference (MPI). That is, since the performance of the pre-rake system is greatly influenced by the amount of interference that depends on an increase in number of multiple paths, an increase of MAI an MPI may deteriorate the performance of the pre-rake system compared to when the conventional rake-receiver is utilized. This is because Walsh codes have low orthogonality.

Meanwhile, a pre-rake based system has low reception performance due to channel fading, interference, etc., compared to the conventional rake receiver, and its performance degradation becomes significant as the number of users increases. In order to overcome the problem, a method of reducing interference and improving reception performance by combining the pre-rake based system with a multiple antenna technology has been proposed.

The multiple antenna technology has marked a quantum leap forward in mobile communication technologies by significantly increasing reception performance, a data transfer rate, etc. A multiple-input multiple-output (MIMO) system reduces influences by main problems in mobile communication, such as fading, delay spread, co-channel interference, etc.. The MIMO system mainly uses a beamforming scheme and a space diversity scheme. Recently, with an increase of requirements for high-quality, broadband communication, a shortage of frequency resources used for mobile communication is predicted in the near feature. In order to increase reuse of frequencies, a beamforming scheme using antennas having spatial directivity is noted. The beamforming scheme is mainly implemented by using a smart antenna capable of adaptively adjusting beam patterns.

The MIMO system has been introduced in 3G WCDMA., WiMAX, etc., and is expected that it will be actively applied to 4th generation communication systems in the near future. However, channel interference that is a basic problem in mobile communication will be more serious as the number of downtowns and the number of users increase. IS-95 or IMT-2000 which is a commercialized CDMA system is exposed to various interference environments that degrade system performance. Also, a beamforming CDMA method based on pre-rake can make hardware simplified, but never avoid performance degradation due to interference.

## SUMMARY

The following description relates to a chip-level/symbol-level beamforming, receiving/transmitting apparatus on a forward and backward links, capable of being applied to various advanced wireless mobile communication applications by improving the performance and capacity of a Code Division Multiple Access (CDMA) array antenna system based on continuously orthogonal spreading codes and a pre-rake scheme for non-interference communication, and a forward and backward link automatic beamforming method.

The following description relates to a beamforming receiving/transmitting function and a beamforming receiving/transmitting structure, which are optimized for a given basic system in order to provide advanced performance in consideration of a wireless mobile communication system through a ultra-high performance CDMA array antenna based on continuously orthogonal spreading codes and a pre-rake scheme for non-interference communication.

In one general aspect, there is provided a base station which receives a signal through a multi-path channel using a plurality of antennas in a communication system, the base station including: a beamforming unit configured to perform chip-level reception beamforming with respect to a pre-raked combined signal received through the plurality of antennas by multiplying the pre-rake combined signal by a plurality of weight vectors corresponding to the respective antennas; and a despreading unit configured to perform matched filtering on the pre-rake combined signal subject to the chip-level reception beamforming, thereby demodulating a user signal.

In another general aspect, there is provided a terminal which receives a signal through a multi-path channel using a plurality of antennas in a communication system, the terminal including: a beamforming unit configured to perform chip-level reception beamforming with respect to a pre-raked combined signal received through the plurality of antennas by multiplying the pre-rake combined signal by a plurality of weight vectors corresponding to the respective antennas; and a despreading unit configured to perform matched filtering on the pre-rake combined signal subject to the chip-level reception beamforming, thereby demodulating a user signal.

In another general aspect, there is provided a base station which receives a signal through a multi-path channel using a plurality of antennas, the base station including: a despreading unit configured to perform matched filtering on a plurality of pre-rake combined signals received through the plurality of antennas, thereby demodulating a user signal; and a beamforming unit configured to perform symbol-level reception beamforming with respect to the user signal by multiplying the user signal by a plurality of weight vectors corresponding to the respective antennas.

In another general aspect, there is provided a terminal which receives a signal through a multi-path channel using a plurality of antennas, the terminal including: a despreading unit configured to perform matched filtering on a plurality of pre-rake combined signals received through the plurality of antennas, thereby demodulating a user signal; and a beamforming unit configured to perform symbol-level reception beamforming with respect to the user signal by multiplying the user signal by a plurality of weight vectors corresponding to the respective antennas.

In another general aspect, there is provided a method in which a base station receives a signal through a multi-path channel using a plurality of antennas in a communication system, the method including: performing chip-level reception beamforming with respect to a pre-raked combined signal received through the plurality of antennas by multiplying the pre-rake combined signal by a plurality of weight vectors corresponding to the respective antennas; and performing matched filtering on the pre-rake combined signal subject to the chip-level reception beamforming, thereby demodulating a user signal.

In another general aspect, there is provided a method in which a base station receives a signal through a multi-path channel using a plurality of antennas, the method including: performing matched filtering on a plurality of pre-rake combined signals received through the plurality of antennas, thereby demodulating a user signal; and performing symbol-level reception beamforming with respect to the user signal by multiplying the user signal by a plurality of weight vectors corresponding to the respective antennas.

In another general aspect, there is provided a base station which transmits a signal using a plurality of antennas in a communication system, the base station including: a spreading unit configured to spread-modulate a user signal using continuously orthogonal spreading codes having a characteristic of being continuously orthogonal for a predetermined time interval to generate a spreading signal; a pre-rake combiner configured to perform pre-rake combining of the spreading signal and to generate a pre-rake combined signal; and a beamforming unit configured to perform chip-level transmission beamforming by multiplying the pre-rake combined signal by a plurality of weight vectors corresponding to the respective antennas.

As described above, by providing a transmitting/receiving apparatus for chip-level/symbol-level beamforming based on a multiple antenna system on a forward and backward links and providing a chip-level/symbol-level beamforming method, it is possible to increase the system performance and capacity. Accordingly, a ultra-high performance base station and terminal having no-interference reception performance as well as achieving high hardware and power efficiency may be realized.

Therefore, by applying the pre-rake scheme and continuously orthogonal spreading codes to a CDMA system with an array antenna, the configuration of the CDMA system can become significantly simple. The pre-rake scheme significantly reduces the number of required matched filters and the continuously orthogonal spreading codes perform complete interference cancellation, thereby making it possible to prevent performance deterioration due to an increase in number of users.

Interference cancellation is first performed by beamforming and then more complete interference cancellation is performed through spreading/despreading by continuously orthogonal spreading codes. Accordingly, Multiple Access Interference (MAI) and Multi-Path Interference (MPI) unavoidably following wireless communication may be cancelled so that a beamforming system can guarantee a complete array gain.

Accordingly, it is possible to achieve high hardware efficiency through the pre-rake scheme, to ensure optimal performance of a beamforming system through the interference cancellation capacity of continuously orthogonal spreading codes, to guarantee price competitiveness of a terminal as well as a base station, and to achieve equipment compactness and low power consumption.

Furthermore, by simplifying the hardware structure of a CDMA beamforming system and reducing the amount of data processing of the CDMA beamforming system as well as enhancing its performance, price competitiveness may be ensured and power consumption may be reduced. In particular, when the CDMA beamforming system is applied to a terminal, a compact device size can be achieved through hardware simplification, and a battery problem is overcome through low power consumption.

The above features of satisfying all of high efficiency, economical efficiency, and excellent performance can be applied to a variety of mobile wireless communication applications.

Other features and aspects will be apparent from the following detailed description, the drawings, and the claims.

## BRIEF DESCRIPTION OF THE DRAWINGS

FIG. 1 is a diagram illustrating an example of a communication system.

FIG. 2 is a diagram illustrating a configuration example of a terminal that can perform multiple-input multiple-output (MIMO) beamforming.

FIG. 3 is a diagram illustrating a configuration example of a transmitter of the terminal in the case where the terminal has a single antenna.

FIG. 4 is a diagram illustrating a configuration example of a receiver of a base station which performs chip-level reception beamforming to receive signals from a terminal.

FIG. 5 is a diagram illustrating a configuration example of a receiver of the base station where channel estimation is performed upon chip-level reception beamforming.

FIG. 6 is a diagram illustrating a configuration example of a receiver of a base station which performs symbol-level reception beamforming to receive signals from a terminal.

FIG. 7 is a diagram illustrating a configuration example of a receiver of the base station where channel estimation is performed upon symbol-level reception beamforming.

FIG. 8 is a diagram illustrating a configuration example of a transmitter of a base station which performs forward transmission beamforming to transmit signals to a terminal.

FIG. 9 is a diagram illustrating a configuration example of a receiver of a terminal with a single antenna, which can perform multiple-input signal-output (MISO) beamforming.

FIG. 10 is a diagram illustrating a configuration example of a receiver of a terminal with multiple antennas, which can perform chip-level MIMO beamforming.

FIG. 11 is a diagram illustrating a configuration example of the receiver of the terminal with multiple antennas, which can perform chip-level MIMO beamforming, when channel estimation is performed.

FIG. 12 is a diagram illustrating a configuration example of a receiver of a terminal with multiple antennas, which can perform symbol-level MIMO beamforming.

FIG. 13 is a diagram illustrating a configuration example of the receiver of the terminal with multiple antennas, where channel estimation is performed upon symbol-level reception beamforming.

FIG. 14 is a flowchart illustrating an example of a method in which a base station receives signals transmitted through a multi-path channel using a plurality of antennas.

FIG. 15 is a flowchart illustrating an example of a method in which a terminal receives signals transmitted through a multi-path channel using a plurality of antennas.

FIG. 16 is a flowchart illustrating an example of another method in which a base station receives signals transmitted through a multi-path channel using a plurality of antennas.

FIG. 17 is a flowchart illustrating an example of another method in which a terminal receives signals transmitted through a multi-path channel using a plurality of antennas.

FIG. 18 is a flowchart illustrating an example of a method in which a terminal transmits signals through a multi-path channel using a plurality of antennas.

FIG. 19 is a flowchart illustrating an example of a method in which a base station transmits signals through a multi-path channel using a plurality of antennas.

Throughout the drawings and the detailed description, unless otherwise described, the same drawing reference numerals will be understood to refer to the same elements, features, and structures. The relative size and depiction of these elements may be exaggerated for clarity, illustration, and convenience.

## DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

FIG. 1 is a diagram illustrating an example of a communication system 110

Referring to FIG. 1, the communication system 110, which is a Code Division Multiple Access (CDMA) beamforming system based on a pre-rake scheme and continuously orthogonal spreading codes, includes a terminal 110 and a base station 120.

The terminal 110 and the base station 120 may function as a transmitting apparatus and a receiving apparatus, respectively. The terminal 110 and the base station 120 may be connected to each other via a multi-path channel. The terminal 110 includes a transmitter 112 for transmitting signals through antennas 1 through N and a receiver 114 for receiving signals through the antennas 1 through N. The base station 120 includes a transmitter 122 for transmitting signals through antennas 1 through M and a receiver 124 for receiving signals through the antennas 1 through M.

On a backward link, the transmitter 112 of the terminal 110 may spread-modulate an input signal (or a user signal) using continuously orthogonal spreading codes having a characteristic of being continuously orthogonal for a predetermined time interval and then perform pre-rake combining of the spread-modulated input signal to thereby transmit the pre-rake combined signal. The receiver 124 of the base station 120 may receive a signal transmitted from the terminal 110 via a multi-path channel and then restore the signal of the terminal 110 from the received signal. Upon such backward reception beamforming, in order to efficiently receive signals from the terminal 110, the base station 120 may obtain a weight vector for forming a reception beam corresponding to the terminal 110 to use the weight vector for forward transmission beamforming or to modulate and use the weight vector for forward transmission beamforming.

Likewise, on a forward link, the transmitter 122 of the base station 120 may spread-modulate an input signal using continuously orthogonal spread codes and then perform pre-rake combining of the input signal to thereby transmit the pre-rake combined signal. The receiver 114 of the terminal 110 may receive the signal transmitted from the base station 120 via a multi-path channel and then restore the signal of the base station 120 from the received signal. A conventional technology related to pre-rake and continuously orthogonal spreading codes has been disclosed in detail in Korean Patent Application No. 10-2007-0042510.

Since existing Walsh codes lose orthogonality and generate large deterioration when they fail to be synchronized, the current example uses continuously orthogonal spreading codes having a characteristic of being completely continuously orthogonal between signals received for a predetermined chip interval.

The continuously orthogonal spreading codes are spread codes having a characteristic of being continuously orthogonal for a predetermined time interval, and have an auto-correlation function value of 0 and a cross-correlation function value of 0 for the predetermined time period. Here, the predetermined time period may be a length capable of covering a main delay path length of multi-path interference. The continuously orthogonal spreading codes may include multi-phase and multi-level continuously orthogonal codes. The continuously orthogonal spreading codes may include any one of zero correlation duration (ZCD), zero correlation zone (ZCZ), and large area synchronous (LAS). By using such continuously orthogonal spreading codes instead of Walsh codes, interference, such as MAI and MPI, may be cancelled, wherein the MAI is multi-access interference, that is, multi-user interference, and MPI is multi-path interference, that is, self-interference.

The terminal 110 may include N antennas, and the base station 120 may include M antennas, wherein N is a natural number equal to or greater than 1, and M is a natural number equal to or greater than 2. In the case where the terminal 110 has two or more antennas, a multiple-input multiple-output (MIMO) beamforming system may be implemented, and if the terminal has a single antenna, a single input multiple output (SIMO) or multiple input single output (MISO) beamforming system may be implemented.

That is, in the case of the backward link from the terminal 110 to the base station 120, a SIMO or MIMO beamforming system may be implemented, and in the case of the forward link from the base station 120 to the terminal, a MISO or MIMO beamforming system may be implemented.

The N antennas of the terminal 110 can be understood as components of the transmitter 112 and the receiver 114. Likewise, the M antennas of the base station 120 can be understood as components of the transmitter 122 and the receiver 124.

When the base station 120 has a multiple antenna system and the terminal 110 has a single antenna system, forward and backward signal flows are as follows.

### 1. Backward Signal Flow

First, backward signal flow from the terminal 110 to the base station 120 can be expressed as equation 1 below.

When a signal $S_k(t)$ generated by the terminal 110 is transmitted to the base station 120, the signal $S_k(t)$ is subject to reception beamforming by multiple antennas of the base station 120 and the base station 120 receives the resultant signal x(t) which is expressed by equation 1 below.

$$x(t)=\sum_{k=1}^{K}\sum_{l=0}^{L-1}a(\theta_{k,l})b_{k,l}s_k(t-lT_c)\exp(j\gamma_{k,l})+n(t) \quad (1)$$

where n(t) is a white noise vector generated by each antenna of the base station 120, $b_{k,1}$ and $\exp(j\gamma_{k,1})$ are the amplitude (or a path gain) and phase of a user signal (or a data symbol), respectively, which depend on a path via a channel, K is a total number of users who use the corresponding communication system, L is a total number of paths that are used in the communication system, and $a(\theta_{k,l})$ is a vector corresponding to each signal received by each antenna element of the base station 120, the vector generated due to a different reception timing. Reception timing differences may be expressed as a delay time and make phase differences between signals received by the individual antennas of the base station 120. $T_c$ corresponds to one chip period of a spreading code.

$a(\theta_{k,l})$ may be generalized to an array response vector or an array steering vector for a k-th user and a 1-th path, which is written as equation 2 below.

$$a(\theta_{k,l})=\left[1,\ e^{-\frac{-j2\pi d\sin(\theta_{k,l})}{\lambda}},\ e^{-\frac{-j4\pi d\sin(\theta_{k,l})}{\lambda}},\ \ldots,\ e^{-\frac{-j2(M-1)\pi d\sin(\theta_{k,l})}{\lambda}}\right] \quad (2)$$

where d represents an antenna interval and is λ/2 as in a general beam forming system, and λ is the wavelength of a signal.

The base station 120 extracts a part that is to be compared to a reference signal from the received signal x(t) (equation 1), and applies a beamforming algorithm to the extracted part together with the reference signal to calculate a weight vector $w_k^H$. The weight vector $w_k^H$ is multipled by the received signal x(t), thereby completing reception beamforming.

$$y_k(t)=w_k^H x(t) \quad (3)$$

Equation (3) is a signal before being despreaded by a matched filter (not shown) of the receiver 122 of the base station 120.

Upon despreading, the matched filter generates a spreading code $C_k$, (L-1)(t) at a chip time $(L-1)T_c$ at which a peak signal exists with respect to a reception signal from a user k, thereby performing despreading.

In order to obtain a weight vector, a reference signal is needed and in the case of TDD, the following midamble is used. The midamble has been already known to the receiver 124 of the base station 120, and can be expressed as equation 4 below.

$$\hat{d}_{k,(L-1)}(n)=[m_I^{(k)}(n)+jm_Q^{(k)}(n)]\delta(n-\tau_{k,(L-1)}) \quad (4)$$

where the meaning of (L-1) in $\hat{d}_{k,(L-1)}(n)$ and $\tau_{k,(L-1)}$ is that a reference signal (that is, a midamble) is generated at a chip time (L-1)Tc at which a peak signal exists with respect to a reception signal from a user k. Here, since it is assumed that a multi-path consisting of L paths is provided and path indexes are expressed as 1=0, , ..., L-1, the chip time (L-1) Tc is substantially a L-th time. $m_I^{(k)}(n)$ represents an in-phase component of the midamble, and $m_Q^{(k)}(n)$ represents a quadrature component of the midamble.

**2. Forward Signal Flow**

Now, forward signal flow from the base station 120 to the terminal 110 can be expressed as equation 5 below. A signal z(t) generated by multiple antennas of the base station 120 through transmission beamforming can be expressed as equation 5 below.

$$z(t) = \sum_{k=1}^{K} \boldsymbol{w}_k^* s_k(t) \quad (5)$$

where $\boldsymbol{w}_k^*$ is a conjugate vector of a weight vector for a transmission signal from a user k. A forward weight vector may be decided based on a backward weight vector.

A method of deciding a forward weight vector includes a method of using a backward weight vector as a forward weight vector, a method of using an inverse matrix of a backward weight vector as a forward weight vector, etc. The present invention is a system invention that is a superordinate concept of the methods. Here, the norm of the weight vector has to be normalized to "1" in order to maintain Signal to Noise Ratio (SNR) for transmission. The normalization can be expressed by equation 6 below.

$$w_k \Leftarrow w_k / |w_k| \quad (6)$$

Equation 6 makes the magnitude of the weight vector normalized to "1" while maintaining the phase of the weight vector. The normalized weight vector is used for beamforming.

z(t) of equation (5) represents a multiuser signal generated by the multiple antennas of the base station 120, and when the multiuser signal z(t) is received by an i-th user's terminal 110 having a single antenna, the received signal $r_i(t)$ can be expressed as equation 7 below.

$$r_i(t) = \sum_{l=0}^{L-1} \boldsymbol{a}^T(\theta_{i,l}) b_{i,l} z(t - jT_c) \exp(j\gamma_{i,l}) + n(t) \quad , (7)$$

where the signal $r_i(t)$ is a signal of the i-th user before being despread by a matched filter (not shown) included in the receiver 114 of the terminal 110, $\boldsymbol{a}^T(\theta_{i,l})$ represents an array response vector for a 1-th path of the i-th user's terminal 110, and $b_{i,l}$ and $\exp(j\gamma_{i,l})$ represent the amplitude (or a path gain) and phase of each data symbol, which vary according to a path via a channel.

Upon despreading, a matched filter (not shown) for despreading generates a synchronized spreading code $C_k$ (L-1)(t) at a chip time (L-1)Tc at which a peak signal exists with respect to a reception signal from a usr k, thereby performing despreading.

Hereinafter, the operation of the communication system 100 will be described in regard of forward and backward transmission.

FIGS. 2 through 7 illustrate configuration examples of the terminal 110 and the base station 120 (see FIG. 1) for backward transmission in the communication system 100.

FIG. 2 is a diagram illustrating a configuration example of the terminal 110 that can perform MIMO beamforming.

A transmitter 112A of the terminal 110 may transmit signals to the base station 120 through transmission beamforming using multiple antennas. In this case, the terminal 110 performs transmission beamforming and the base station 120 performs reception beamforming. That is, backward MIMO beamforming is performed.

The transmitter 112A includes a normalizer 205, a spreading unit 210, a pre-rake combiner 220, a beamforming unit 230, a weight vector converter 240, a weight vector generator 250, a plurality of RF transceivers 260-1 through 260-N, and an array antenna consisting of a plurality of antenna elements 265-1 through 265-N.

The normalizer 205 normalizes a data sequence $b_k$, which is a user signal of a user k to be transmitted, to a normalization vector Q. The data sequence $b_k$ may be a signal obtained by modulating original user data using a digital modulation method, such as phase shift keying (PSK), quadrature phase shift keying (QPSK), quadrature amplitude modulation (QAM), etc.

The spreading unit 210 performs spread spectrum modulation on the user signal using a continuously orthogonal spreading code, thus generating a spreading signal. The spreading unit 210 may include a continuously orthogonal code generator 212 for generating the continuously orthogonal spreading code and a multiplier 214 for multiplying the continuously orthogonal spreading code by the user signal $b_k$ that is to be transmitted.

The pre-rake combiner 220 performs pre-rake combining of the spreading signal subject to the spread spectrum modulation, thus generating a pre-rake combined signal. In other words, the pre-rake combiner 220 combines the spreading signal with a channel impulse response for a multi-path channel based on channel information acquired during previous data transmission/reception, thereby obtaining a pre-rake combined signal. The combining of the spreading signal with the channel impulse response is to apply a complex conjugate value of the time-inverted value of the channel impulse response to the spreading signal. The beamforming unit 230 multiplies the pre-rake combined signal by weight vectors provided by the weight vector 240 to generate chip-level transmission beams.

The RF transceivers 260-1 through 260-N may modulate the chip-level transmission beams to carrier frequencies. By transmitting signals via the RF transceivers 260-1 through 260-N, peak signals having a RAKE effect while passing through a channel are obtained. The receiver 114 of the base station 120 illustrated in FIG. 1 needs a single matched filter for obtaining a (L-1)-th signal having a RAKE effect among a plurality of signals. Accordingly, a receiver (or the base station 120) which receives a signal transmitted from the transmitter 112A of the terminal 110 may use a reference signal (expressed by equation 4) synchronized with a reception signal on a (L-1)-th path to obtain weight vectors upon reception beamforming. That is, a reference signal that can be expressed by equation 4 may be used to obtain weight vectors corresponding to a peak path that can be expressed by equation 3.

The weight vector converter 240 provides weight vectors that are supplied to the beamforming unit 230. The weight vector converter 240 may provide weight vectors provided by the weight vector generator 250 to the beamforming unit 230. The weight vector generator 250 may generate weight vectors acquired from the base station 120, wherein the weight vectors have been decided by weight vector generators (430, 530-1 through 530-N in FIGS. 4 and 5, which will be described later) included in the base station 120 upon a previous communication between the terminal 110 and the base station 120.

There are methods of using weight vectors obtained in a previous time slot for a predetermined time slot interval, of predicting weight vectors based on previously calculated weight vectors and using the predicted weight vectors as weight vectors for a next time slot interval, of using weight vectors obtained in a current time slot without any conversion, etc. However, a method of using the weight vectors is not limited to the methods mentioned above. The operation of the weight vector converter 240 may depend on which one among the above-mentioned method is used.

FIG. 3 is a diagram illustrating a configuration example of a transmitter 112B of the terminal 110 illustrated in FIG. 1 in the case where the terminal 110 has a single antenna.

The transmitter 112B includes a normalizer 305, a spreading unit 310, a pre-rake combiner 320, an RF transceiver 330, and a single antenna 335.

The normalizer 305 normalizes a user signal $b_k$ of a user k, which is to be transmitted, to a normalization factor Q, and transfers the normalized user signal to the spreading unit 310. The spreading unit 310 includes a continuously orthogonal code generator 312 and a multiplier 314. The continuously orthogonal code generator 312 generates a continuously orthogonal spreading code, and the multiplier 314 multiplies the normalized user signal by the continuously orthogonal spreading code to spread-modulate the normalized user signal, thereby generating a spreading signal. The spreading unit 310 transfers the spreading signal to the pre-rake combiner 320.

The pre-rake combiner 320 converts the spread-modulated spreading signal to a pre-rake combined signal. The pre-rake combined signal is transmitted through the signal antenna 335 via the RF transceiver 330.

The pre-rake combined signal transmitted from the transmitter 112B of the terminal 110 may be received by the base station 120 through reception beamforming by the base station 120. In this case, SIMO beamforming may be performed.

FIG. 4 is a diagram illustrating a configuration example of a receiver 124A of the base station 120 (see FIG. 1) which performs chip-level reception beamforming to receive signals from the terminal 110.

Referring to FIG. 4, the receiver 124A of the base station 120 may be configured to receive signals transmitted from the transmitter 112A or 112B (see FIGS. 2 and 3) of the terminal 110 through chip-level reception beamforming. Referring to FIG. 4, the receiver 124A of the base station 120 includes an array antenna consisting of a plurality of antennas 401-1 through 401-M, a plurality of RF transceivers 405-1 through 405-M, a beamforming unit 410, a first demultiplexing unit 420, a plurality of weight vector generators 430-1 through 430-K, a plurality of reference signal generators 440-1 through 440-K, a plurality of second demultiplexing units 450-1 through 450-K, and a plurality of despreading units 460-1 through 460-K. The beamforming unit 410 may include a plurality of beamforming elements 410-1 through 410-K. In the current example, the numbers of the beamforming elements 410-1 through 410-K, the weight vector generators 430-1 through 430-K, the reference signal generators 440-1 through 440-K, the second demultiplexing units 450-1 through 450-K, and the despreading units 460-1 through 450-K may be a total number of users included in the corresponding communication system.

Pre-rake combined signals transmitted from the terminal 110 are received by the individual antennas 401-1 through 401-M via a multi-path channel. The signals received by the individual antennas 401-1 through 401-M are input to the RF transceivers 405-1 through 405-M. The RF-transceivers 405-1 through 405-M may convert the individual signals received through the array antenna 401-1 through 401-M to base-band signals.

The beamforming elements 410-1 through 410-K multiply the signals received through the RF transceivers 405-1 through 405-M by weight vectors, respectively, and perform chip-level reception beamforming on the received pre-rake combined signals for each user (that is, for each terminal). The signal before being multiplied by a weight vector may be expressed as equation 1 above.

The weight vector generators 430-1 through 430-K generate beamforming vectors according to a beamforming algorithm for each user, and provide the beamforming vectors to the beamforming elements 410-1 through 410-K. The weight vector generators 430-1 through 430-K may apply a predetermined algorithm to reference signals extracted from signals received by the antenna elements 401-1 through 401-M via a channel for each user and original reference signals generated by the reference signal generators 440-1 through 440-K, thereby acquiring weight vectors. The first demultipexing unit 420 may extract reference signals from the signals received by the array antenna 401-1 through 401-M via a channel.

The reference signals may be midambles in the case of a time division duplex (TDD) system and pilot signals in the case of a frequency division duplex (FDD) system. As illustrated in FIG. 4, if the number of antennas is M, Mx1 weight vectors are generated.

In the case of the TDD system, a procedure of obtaining weight vectors is as follows. Midamble parts of the base-band signals converted by the RF transceivers 405-1 through 405-M are subject to demultiplexing by the first demultiplexing unit 420 and then input to the weight vector generators 430 -1 through 430-K. The weight vector generators 430-1 through 430-M apply a beamforming algorithm to calculate weight vectors.

The beamforming algorithm includes an Optimal/Sub-optimal method, a reference signal- based beamforming method, etc., specifically, Minimum Mean Square Error (MMSE), Normalized Least Mean Square (NLMS), Least Mean Square (LMS), Recursive Least Square (RLS), etc. The above-mentioned algorithms have their own unique characteristics, however, have a common characteristic of considering signals from other users as interference, suppressing the interference, and then generating weight vectors for beamforming to have an array gain in receiving a signal from a desired user.

However, the weight vector generators 430-1 through 430-M may use another beamforming algorithm that is within the scope not departing from the technical concept of the system. As described above, there are methods of using weight vectors obtained in a previous time slot for a predetermined time slot interval, of predicting weight vectors based on previously calculated weight vectors and using the predicted weight vectors as weight vectors for a next time slot interval, of using weight vectors obtained in a current time slot without any conversion, etc. However, a method of using the weight vectors is not limited to the methods mentioned above.

As described above, the received signals passed through the RF transceivers 405-1 through 405-M are respectively multiplied by the weight vectors for each array in the beamforming unit 410. The resultant signals multiplied by the weight vectors for each array are added to each other, as expressed as equation 3.

The signals expressed as equation 3 are respectively input to the second demultiplexing units 450-1 through 450-K, and the second demultiplexing units 450-1 through 450-K extract user data parts from the signals except for the reference signals (or the midambles) and transfer the user data parts to the despreading unit 460. The despreading unit 460 matched-filters the pre-rake combined signals subject to reception beamforming, thus demodulating a plurality of user signals.

For this operation, the despreading unit 460 may include a plurality of matched filters 460-1 through 460-K to process signals received through the individual antennas 401-1 through 441-M. Each of the matched filters 460-1 through 460-K may be configured to match each reference signal to a code having an interval corresponding to one code cycle. The matched filters 460-1 through 460-K perform matched filtering on a (L-1)-th signal, thereby demodulating a plurality of user signals.

A plurality of determining units 470-1 through 470-N determine signals output from the individual matched filters 460-1 through 460-K and output the user data sequence $b_k$ that has been sent from the terminal 110.

FIG. 5 is a diagram illustrating a configuration example of a receiver 124B of the base station 120 (see FIG. 1) where channel estimation is performed upon chip-level reception beamforming.

Referring to FIG. 5, the receiver 124B of the base station 120 includes an array antenna consisting of a plurality of antenna elements 501-1 through 501-M, a plurality ofRF transceivers 505-1 through 505-M, a plurality of beamforming elements 510-1 though 501-M, a first demultiplexing unit 520, a plurality of weight vector generators 530-1 through 530-K, a plurality of reference signal generators 540-1 through 540-K, a plurality of second demultiplexing units 550-1 through 550-K, a plurality af despreading units 560-1 through 560-N, and a plurality of channel estimators 570-1 through 570-K.

The receiver 124B illustrated in FIG. 5 has a configuration similar to that of the receiver 124A illustrated in FIG. 4, except that the receiver 124B includes the channel estimators 570-1 through 570-K. For this, the second demultiplexing units 550-1 through 550-K may be configured to extract user data parts from received signals by excluding reference signals from the received signals and output the user data parts to the despreading units 560-1 through 560-K, and to output the reference signals to a multiplier 545.

The reference signal generators 540-1 through 540-K generates a plurality of reference signals that are synchronized with a received signal on a (L-1)-th path among a plurality of pre-rake combined signals received for each user. The reference signals generated by the reference signal generators 540-1 through 540-K are respectively input to the channel estimators 580-1 through 580K via the multiplier 545. Each of the channel estimators 580-1 through 580-K perform channel estimation for each user, based on a reference signal part of a signal received via a channel and a reference signal that is synchronized with the received signal on a (L-1)-th path and generated by the reference signal generators 540-1 through 540-K. At this time, the channel estimators 580-1 through 580-K may perform channel estimation using one of various channel estimation methods. The user data parts of the received signals, which have been output from the matched filters 560-1 through 560-K, are compensated using the channel estimated values, and then determined by the determining units 570-1 through 570-K. The channel estimators 580-1 through 580-K and the configuration for processing the reference signals for channel estimation may be selectively used.

FIG. 6 is a diagram illustrating a configuration example of a receiver 124C of the base station 120 (see FIG. 1) which performs symbol-level reception beamforming to receive signals from the terminal 110.

The receiver 124C of the base station 120 illustrated in FIG. 6 is configured to perform symbol-level reception beamforming on the pre-rake combined signal received from the terminal 110 illustrated in FIG. 3 to receive a signal from the terminal 110. The receiver 124C of the base station 120 illustrated in FIG. 6 includes an array antenna consisting of a plurality of antenna elements 601-1 through 601-M, a plurality of RF transceivers 605-1 through 605-M, a plurality of demultiplexing units 610-1 through 610-M, a despreading unit 620, a plurality of beamforming elements 630-1 through 630-K, a plurality of weight vector generators 640-1 through 640-K, a plurality of reference signal generators 650-1 through 650-K, and a plurality of determining units 660-1 through 660-K. In the current example, the numbers of the beamforming elements 630-1 through 630-K, the weight vector generators 640-1 through 640-K, the reference signal generators 650-1 through 650-K, and the determining units 660-1 through 660-K may be configured to numbers corresponding to a total number of users included in the communication system.

For symbol-level beamforming, adversely from signal processing for chip-level beamforming of passing signals through the beamforming elements 410-1 through 410-K and then despreading the resultant signals using the despreading units 460-1 through 460-K, as illustrated in FIG. 4, a plurality of pre-rake combined signals are despreaded by the despreading unit 620 and then symbol-level reception beamforming is performed for each user by the beamforming units 630-1 through 630-K. As such, the signal processing flow by the receiver 124C illustrated in FIG. 6 performs the operations with the same equations as in the signal processing illustrated in FIG. 4.

Referring to FIG. 6, pre-rake combined signals received through the RF transceivers 605-1 through 605-M are divided into user data parts and reference signal parts by the demultiplexing units 610-1 through 610-M. Then, the user data parts are despreaded using continuously orthogonal spreading codes by the despreading unit 620. The despreading unit 620 includes a plurality of matched filters 620-1 through 620-1K, ..., 620-M1 through 620-MK for each array that perform dispreading. The matched filters 620-11 through 620-1K, ..., 620-M1 through 620-MK perform matched filtering in synchronization with a signal on a (L-1)-th path according to the characteristics of a pre-rake system, thereby performing despreading on user data parts.

Also, the demultiplexing units 610-1 through 610-M transfer the reference signal parts among the received signals to the weight vector generators 640-1 through 640-K. The weight vector generators 640-1 through 640-K apply a specific beamforming algorithm to reference signals received from the demultiplexing units 610-1 through 610-M and reference signals that are synchronized to a signal on a (L-1)-th path and generated by the reference signal generators 650-1 through 650-K, thus generating weight vectors.

After the weight vectors are generated, the beamforming elements 630-1 through 630-K perform symbol-level reception beamforming by multiplying symbol-level user data parts despreaded by the individual matched filters 620-11 through 620-1K and 621-M1 through 621-MK of the despreading unit 620 by the respective weight vectors. Thereafter, the user data parts calculated for individual arrays are added to a single signal for each array, respectively.

The weight vector generators 640-1 through 640-K may use methods of using weight vectors obtained in a previous time slot for a predetermined time slot interval, of predicting weight vectors based on previously calculated weight vectors and using the predicted weight vectors as weight vectors for a next time slot interval, of using weight vectors obtained in a current time slot without any conversion, etc. However, a method of using weight vectors is not limited to the methods mentioned above.

The resultant signals subject to the symbol-level reception beamforming by the beamforming units 630-1 through 630-K are input to the determining units 660-1 through 660-K, and the determining units 660-1 through 660-K determine data values of the signals and then output them.

FIG. 7 is a diagram illustrating a configuration example of a receiver 124D of the base station 120 (see FIG. 1) where channel estimation is performed upon symbol-level reception beamforming.

The receiver 124D of the base station 120 illustrated in FIG. 7 includes an array antenna consisting of a plurality of antenna elements 701-1 through 701-M, a plurality of RF transceivers 705-1 through 705-M, a plurality of demultiplexing units 710-1 through 710-M, a despreading unit 720, a plurality of beamforming elements 730-1 through 730-K, a plurality of weight vector generators 740, a plurality of reference signal generators 750-1 through 750-K, a plurality of determining units 760-1 through 760-K, and a plurality of channel estimators 770-1 through 770-K.

The receiver 124D of the base station 120 illustrated in FIG. 7 has a configuration similar to the receiver 124C of the base station 120 illustrated in FIG. 6, except that the receiver 124D includes a plurality of channel estimators 770-1 through 770-K.

The channel estimators 770-1 through 770-K extract reference signal parts from among signals subject to reception beamforming by the beamforming elements 730-1 through 730-K, and perform channel estimation for each user, based on the extracted reference signal parts and reference signals that are synchronized with a reception signal on a (L-1)-th path and generated by the reference signal generators 750-1 through 750-K. The channel estimators 770-1 through 770-K may estimate a channel for each user using one of various estimation methods.

A channel state estimated by the channel estimators 770-1 through 770-K is applied to the signal subject to reception beamforming by the beamforming elements 730-1 through 730-K to perform channel compensation on the signal, and then the channel compensated signal is output via the determining units 760-1 through 780-K.

FIGS. 8 through 13 illustrate configuration examples of the terminal 110 and the base station 120 for forward signal transmission.

FIG. 8 is a diagram illustrating a configuration example of a transmitter 212 of the base station 120 which performs forward transmission beamforming to transmit signals to a terminal.

As described above, in the case of forward transmission, the base station 120 having multiple antennas may perform MISO or MIMO beamforming with respect to the terminal 110 having a single antenna or multiple antennas.

The transmitter 212 of the base station 120 illustrated in FIG. 8 includes a plurality of normalizers 805-1 through 805-K, a plurality of spreading units 810-1 through 810-K, a plurality of multiplexing units 820-1 through 820-K, a reference signal generator 830, a plurality of pre-rake combiners 840-1 through 840-K, a beamforming unit 850, a weight vector converter 860, a weight vector generator 870, a plurality of RF transceivers 880-1 through 880-M, and an array antenna consisting of a plurality of antenna elements 885-1 through 885-M.

The spreading units 810-1 through 810-K spread user data that is to be transmitted using a continuously orthogonal spreading code for each user to generate a spreading signal.

The multiplexing units 820-1 through 820-K perform multiplexing on a reference signal for each user generated by the reference signal generator 830 and a signal corresponding to a user data part for the user, thus outputting a signal for the user.

The pre-rake combiners 840-1 through 840-K performing pre-rake combining of a multiplexed signal for each user to generate pre-rake combined signals.

The beamforming unit 850 performs chip-level transmission beamforming for each user by multiplying weight vectors provided by the weight vector converter 860 by the pre-rake combined signals. The weight vectors may be decided by each terminal 110 that receives signals transmitted from the base station 120, and acquired from the terminal 110.

If signals output from the pre-rake combiners 840-1 through 840-K are $s_k(t)$, the signals $S_k(t)$ are multiplied by weight vectors while passing through the beamforming unit 850, and the resultant signals may be expressed as equation 5 above. That is, signals z(t) resulting from multiplying the signals $S_k(t)$ by conjugate values of weight vectors normalized by equation 6 are transmitted to a channel via the RF transceivers 880-1 through 880-M of the individual antennas elements.

The weight vector converter 860 and the weight vector generator 870 may perform operations corresponding to the weight vector converter 240 and the weight vector generator 250 of the terminal 120 illustrated in FIG. 2. The weight vector converter 860 may provide a weight vector corresponding to a pre-rake combined signal for each user, and the weight vector generator 870 may generate a weight vector for each user and provide the weight vector to the weight vector converter 860.

A receiver that receives the signals z(t) may be a terminal having multiple antennas for chip-level reception beamforming, as illustrated in FIG. 10 or 11, or may be a terminal having multiple antennas for symbol-level reception beamforming, as illustrated in FIG. 12 or 13. Also, a receiver that receives the signals z(t) may be a terminal having a single antenna, as illustrated in FIG. 9, in order to enhance hardware efficiency of a terminal and achieve low power consumption. That is, in this specification, the number of antennas included in a base station or terminal is not limited.

FIG. 9 is a diagram illustrating a configuration example of a receiver 114A of the terminal 110 (see FIG. 1) with a single antenna, which can perform MISO beamforming.

The receiver 114A of the terminal 110 illustrated in FIG. 9 includes a single antenna 910, an RF transceiver 905, a matched filter 910, and a determining unit 920.

When signals are received by the terminal 110 with the single antenna 910 via a multi-path fading channel, the receiver 114 of the terminal 110 needs to have only one matched filter 910 since the signals have been already subject to the pre-rake effect upon transmission.

Meanwhile, a signal received by a receiver in a specific direction is a combined signal of signals transmitted respectively from an array antenna of a transmitter. Thus, a time difference exists between signals transmitted from the individual antennas according to an antenna direction of a receiver, and the time difference becomes a phase difference. The phase difference is called an array response, and the array response which is represented as a vector value is multiplied by signals transmitted from individual antennas. Accordingly, a signal received by a receiver at a specific direction is a signal multiplied by a specific array response and passed through a multi-path channel. The signal can be expressed as equation 7 above. As seen in equation 7, white noise, instead of a vector value, is added since the receiver has been assumed to have a single antenna, and the signal is subject to despreading using a continuously orthogonal spreading code in the matched filter 910 of the receiver 114A.

FIG. 10 is a diagram illustrating a configuration example of a receiver 114B of the terminal 110 (see FIG. 1) with multiple antennas, which can perform chip-level MIMO beamforming.

Referring to FIG. 10, the receiver 114B of the terminal 110 includes an array antenna consisting of a plurality of antenna elements 1001-1 through 1001-N, a plurality of RF transceivers 1005-1 through 1005-M, a beamforming unit 1010, a first demultiplexing unit 1020, a weight vector generator 1030, a reference signal generator 1040, a second demultiplexing unit 1050, a despreading unit 1060, and a determining unit 1070.

A plurality of pre-rake combined signals transmitted from the base station are received by the antennal elements 1001-1 through 1001-M via a multi-path channel, and then input to the beamforming unit 1010 via the RF transceivers 1005-1 through 1005-M.

The beamforming unit 1010 performs chip-level reception beamforming by multiplying the received signals received through the individual RF transceivers 1005-1 through 1005-N by weight vectors. The resultant signals multiplied by the weight vectors are added to each other and then output to the second demultiplexing unit 1050.

The weight vector generator 1030 may generate bemforming vectors according to a beamforming algorithm and provide the beamforming vectors to the beamforming unit 1010. The weight vector generator 1030 may obtain weight vectors for targets by applying a specific algorithm to reference signals extracted from signals received by the individual antennas 1001-1 through 1001-N through a channel and reference signals that are synchronized with a reception signal on a (L-1)-th path and generated by the reference signal generator 1040.

The reference signals may be midambles in the case of the TDD system and pilot signals in the case of the FDD system. As illustrated in FIG. 10, if the number of antennas is N, Nx1 weight vectors are generated.

In the case of the TDD system, a procedure of obtaining weight vectors is as follows.

Signals received by the antenna elements 1001-1 through 1001-M are input to the first demultiplexing unit 1020 through the RF transceivers 1005-1 through 1005-M, and the first demultiplexing unit 1020 performs demultiplexing on the midamble parts of the signals and transfers the demultiplexed midamble parts to the weight vector generator 1030. The weight vector generator 1030 uses a beamforming algorithm stored therein to calculate weight vectors.

The second demultiplexing unit 1050 extracts user data parts from the signals subject to reception beamforming, which are output from the beamforming unit 1010, except for the midamble parts, and then transfers the user data parts to the despreading unit 1010 that has been synchronized with a (L-1)-th signal. The despreading unit 1010 performs despreading of the user data parts. The despreading unit 1060 may be a matched filter for performing matched filtering on the received signals with respect to the (L-1)-th signal.

The determining unit 1070 may determine a signal output from the matched filter 1060 and output a user data sequence $b_k$ that has been sent from the base station 120.

FIG. 11 is a diagram illustrating a configuration example of a receiver 114 of the terminal 110 (see FIG. 1) with multiple antennas, which can perform chip-level MIMO beamforming, when channel estimation is performed.

Referring to FIG. 11, the receiver 114C of the terminal 110 includes an array antenna consisting of antenna elements 1101-1 through 1101-N, a plurality of RF transceivers 1105-1 through 1105-N, a beamforming unit 1110, a first demultiplexing unit 1120, a weight vector generator 1130, a reference signal generator 1140, a second demultiplexing unit 1150, a despreading unit 1160, a determining unit 1170, and a channel estimator 1180.

The receiver 114C of the terminal 110 illustrated in FIG. 11 has a configuration similar to the receiver 114B of the terminal 110 illustrated in FIG. 10, except that the receiver 11C of the terminal 110 includes a channel estimator 1180. Also, the second demultiplexing unit 1150 outputs user data parts of received signals to the despreading unit 1160, and reference signals of the received signals to the multiplier 1145.

Each reference signal that is synchronized with a reception signal on a (L-1)-th path and generated by the reference signal generator 1140 is input to the channel estimator 1180 through the multiplier 1145. The channel estimator 1180 estimates a channel, using a reference signal output from the second demultiplexing unit 1150, which is a reference signal part of a signal received through a channel, and a reference signal generated by the reference signal generator 1140. The channel estimator 1180 may perform channel estimation using one of various estimation methods. A channel estimation value that represents a channel state estimated by the channel estimator 1180 is applied to a user data part output from the despreading unit 1160, subject to channel compensation, and then output via the determining unit 1170.

FIG. 12 is a diagram illustrating a configuration example of a receiver 114D of the terminal 110 (see FIG. 1) with multiple antennas, which can perform symbol-level MIMO beamforming.

The receiver 114D of the terminal 110 includes an array antenna consisting of a plurality of antenna elements 1201-1 through 1201-N, a plurality of RF transceivers 1205-1 through 1205-N, a plurality of demultiplexing units 1210-1 through 1210-N, a despreading unit 1220, a beamforming unit 1230, a weight vector generator 1240, a reference signal generator 1250, and a determining unit 1260. The despreading unit 1220 includes a plurality of matched filters 1220-1 through 1220-N.

For symbol-level beamforming, adversely from signal processing for chip-level beamforming of passing signals through the beamforming unit 1110 and then despreading the resultant signals using the despreading unit 1160, as illustrated in FIG. 11, received signals are despreaded by the despreading unit 1220 and demodulated, and then symbol-level reception beamforming is performed by the beamforming unit 1230. As such, the signal processing flow performs the operations with the same equations as in the signal processing illustrated in FIG. 11.

Referring to FIG. 12, the received signals passed through the RF transceivers 1205-1 through 1205-N are divided into user data parts and reference signal parts by the demultiplexing units 1210-1 through 1210-N for each array. Then, the user data parts are despreaded using a continuously orthogonal spreading code by the despreading unit 1230. The matched filters 1220-1 through 1220-N that perform despreading perform matched filtering on the user data parts in synchronization with a reception signal on a (L-1)-th path according to the characteristics of the pre-rake system, thereby performing despreading.

Also, the demultiplexing units 1210-1 through 1210-N transfer the reference signal parts of the received signals to the weight vector generator 1240. The weight vector generator 124 applies a specific beamforming algorithm to a reference signal received from the demultiplexing unit 1210 and a reference signal that is generated by the reference signal generator 1250 and synchronized with a reception signal on a (L-1)-th path, thereby generating weight vectors.

After weight vectors are generated, the beamforming unit 1230 performs symbol-level beamforming by multiplying symbol-level user data parts divided and despreaded by the respective matched filters of the despreading unit 1220 by the weight vectors and then adding the data parts calculated for each array to each other to generate a single signal.

The weight vector generator 1240 may use one among methods of using weight vectors obtained in a previous time slot for a predetermined time slot interval, of predicting weight vectors based on previously calculated weight vectors and using the predicted weight vectors as weight vectors for a next time slot interval, of using weight vectors obtained in a current time slot without any conversion, etc. However, a method of using weight vectors is not limited to the methods mentioned above.

FIG. 13 is a diagram illustrating a configuration example of a receiver 114E of the terminal 110 (see FIG. 1) with multiple antennas, where channel estimation is performed upon symbol-level reception beamforming.

The receiver 114E of the terminal 110 illustrated in FIG. 13 includes an array antenna consisting of a plurality of antenna elements 1301-1 through 1301-N, a plurality of RF transceivers 1305-1 through 1305-N, a plurality of demultiplexing units 1310-1 through 1310-N, a despreding unit 1320, a beamforming unit 1330, a weight vector generator 1340, a reference signal generator 1350, a determining unit 1360, and a channel estimator 1370.

The receiver 114E of the terminal 110 has a configuration similar to the receiver 114D of the terminal 110 illustrated in FIG. 12, except that the receiver 114E includes a channel estimator 1370.

The channel estimator 1370 performs channel estimation using a reference signal part of a signal received through a channel and an original reference signal generated by the reference signal generator 1350. A channel state estimated by the channel estimator 1370 may be applied to a signal subject to reception beamforming by the beamforming unit 133, subject to channel compensation, and then output via the determining unit 1360.

In the case where the terminal 110 has multiple antennas as illustrated in FIGS. 10 through 13, the terminal 110 that receives signals subject to transmission beamforming performs reception beamforming through the weight vector generator and the beamforming unit, resulting in a greater array gain and an improved interference reduction effect. Also, through the interference cancellation capacity of continuously orthogonal spreading codes, deterioration due to interference may little occur in spite of an increase in number of users.

FIG. 14 is a flowchart illustrating an example of a method in which the base station 120 (see FIG. 1) receives signals transmitted through a multi-path channel using a plurality of antennas.

The base station 120 receives a plurality of pre-rake combined signals through the plurality of antennas (1410). The base station 120 may receive the pre-rake combined signals from a terminal having multiple antennas, as described above with reference to FIG. 2, or from a terminal having a single antenna, as described above with reference to FIG. 3.

Then, the base station 120 performs chip-level reception beamforming with respect to the pre-rake combined signals for each user by multiplying the pre-rake combined signals by weight vectors corresponding to the respective antennas (1420). The base station 120 performs matched filtering on the pre-rake combined signals subject to the reception beamforming to despread the pre-rake combined signals, thereby demodulating a plurality of user signals (1430).

The base station 120 may extract reference signal parts from the signals subject to the reception beamforming, and perform channel estimation using the extracted reference signal parts and reference signals generated by a reference signal generator. Then, the base station 120 may correct user data parts of the demodulated user signals using channel estimation values obtained through channel estimation.

FIG. 15 is a flowchart illustrating an example of a method in which the terminal 110 receives signals transmitted through a multi-path channel using a plurality of antennas.

The terminal 110 receives a plurality of pre-rake combined signals through a plurality of antennas (1510). The terminal 110 may receive the pre-rake combined signals from a base station as described above with reference to FIG. 8.

Then, the terminal 110 performs chip-level reception beamforming with respect to the pre-rake combined signals by multiplying the pre-rake combined signals by weight vectors corresponding to the respective antennas (1520). Successively, the terminal 110 performs matched filtering on the pre-rake combined signal subject to reception beamforming to despread the pre-rake combined signals, thereby demodulating a user signal of the terminal 110 (1530).

Then, the terminal 110 extracts reference signal parts from the signals subject to the reception beamforming, and estimate a channel using the extracted reference signal parts and reference signals generated by a reference signal generator. Next, the terminal 110 may correct user data parts of the demodulated user signals using channel estimation values obtained through channel estimation.

FIG. 16 is a flowchart illustrating an example of another method in which the base station 120 receives signals transmitted through a multi-path channel using a plurality of antennas.

The base station 120 receives a plurality of pre-rake combined signals through a plurality of antennas (1610). The base station 120 may receive the pre-rake combined signals from a terminal having multiple antennas, as described above with reference to FIG. 2, or from a terminal having a single antenna, as described above with reference to FIG. 3.

The base station 120 performs matched filtering on the pre-rake combined signals received through the antennas, thus demodulating a plurality of user signals. The base station 120 performs symbol-level reception beamforming with respect to the user signals for each user by multiplying the user signals by weight vectors corresponding to the respective antennas (1630).

Then, the base station 120 extracts reference signal parts from among the signals subject to the reception beamforming, estimates a channel for each user using the extracted reference signal parts and reference signals generated by a reference signal generator, and corrects the signal subject to the reception beamforming for each user using channel estimation values obtained through channel estimation.

FIG. 17 is a flowchart illustrating an example of another method in which the terminal 110 receives signals transmitted through a multi-path channel using a plurality of antennas.

The terminal 110 receives a plurality of pre-rake combined signals transmitted through a multi-path channel using a plurality of antennas (1710). The terminal 110 may receive the pre-rake combined signals from a base station as described above with reference to FIG. 8.

The terminal 110 performs matched filtering on the pre-rake combined signals received through the antennas, thereby demodulating its user signal (1720). Then, the terminal 110 performs symbol-level reception beamforming by multiplying the user signal signal by weight vectors corresponding to the respective antennas (1730).

The terminal 110 extracts reference signal parts from the signals subject to the reception beamforming, performs channel estimation using the extracted reference signal parts and reference signals generated by a reference signal generator, and then correct the signal subject to the reception beamforming using channel estimation values obtained through channel estimation.

FIG. 18 is a flowchart illustrating an example of a method in which the terminal 110 (see FIG. 1) transmits signals through a multi-path channel using a plurality of antennas.

The terminal 110 spread-modulates a user signal using continuously orthogonal spreading codes having a characteristic of being continuously orthogonal for a predetermined time interval, thus generating a spreading signal (1810).

Then, the terminal 110 performs pre-rake combining of the spreading signal to generate a pre-rake combined signal (1820).

Successively, the terminal 110 performs chip-level transmission beamforming by multiplying the pre-rake combined signal by weight vectors corresponding to the respective antennas (1830).

FIG. 19 is a flowchart illustrating an example of a method in which the base station 120 transmits signals through a multi-path channel using a plurality of antennas.

The base station 120 spread-modulates a plurality of user signals using continuously orthogonal spreading codes having a characteristic of being continuously orthogonal for a predetermined time interval to generate spreading signals for individual users (1910).

Then, the base station 120 performs pre-rake combining of the spreading signals to generate a plurality of pre-rake combined signals. (1920).

Successively, the base station 120 performs chip-level transmission beamforming by multiplying the pre-rake combined signals by weight vectors corresponding to the respective antennas for individual users (1930).

The examples as described above relate to the case where the TDD system is used, however, can be applied to the FDD system where channel information of a receiver is fed back to a transmitter so that the transmitter can use the channel information. Generally, the TDD system uses midambles as reference signals, while the TDD system uses pilot signals as reference signals.

The present invention can be implemented as computer readable codes in a computer readable record medium. The computer readable record medium includes all types of record media in which computer readable data are stored. Examples of the computer readable record medium include a ROM, a RAM, a CD-ROM, a magnetic tape, a floppy disk, and an optical data storage. Further, the record medium may be implemented in the form of a carrier wave such as Internet transmission. In addition, the computer readable record medium may be distributed to computer systems over a network, in which computer readable codes may be stored and executed in a distributed manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

**1.** A receiver which receives a signal through a multi-path channel using a plurality of antennas in a communication system, the receiver comprising:

a beamforming unit configured to perform chip-level reception beamforming with respect to a pre-raked combined signal received through the plurality of antennas by multiplying the pre-rake combined signal by a plurality of weight vectors corresponding to the respective antennas; and
a despreading unit configured to perform matched filtering on the pre-rake combined signal subject to the chip-level reception beamforming, thereby demodulating a user signal.

**2.** The receiver of claim 1, further comprising:

a first demultiplexing unit configured to extracts a reference signal part from the pre-rake combined signal;
a reference signal generator configured to generate a reference signal that is synchronized with a reception signal on a (L-1)-th path among the pre-rake combined signals; and
a weight vector generator configured to generate the weight vectors using the extracted reference signal parts and the reference signals generated by the reference signal generator and to provide the weight vectors to the beamforming unit.

**3.** The receiver of claim 1, further comprising:

a second demultiplxing unit configured to extract the reference signal part from the signal subject to the chip-level reception beamforming by the beamforming unit; and
a channel estimator configured to perform channel estimation using the extracted reference signal part and the reference signal generated by the reference signal generator,
wherein a user data part output from the despreading unit is corrected to a channel estimation value through the channel estimation by the channel estimator.

**4.** The receiver of claim 3, wherein the second demultiplexing unit extracts a user data part from the signals subject to the chip-level reception beamforming by the beamforming unit and outputs the user data part to the despreading unit, and the despreading unit despreads the user data part.

**5.** The receiver of claim 1, being a base station which receives a signal transmitted from the terminal, in a communication system where the terminal and the base station are connected to each other through a multi-path channel, wherein if the receiver is a base station, the base station generates a plurality of weight vectors for individual users, the beamforming unit performs chip-level reception beamforming for each user using the weight vectors, and the despreading unit performs matched filtering on the pre-rake combined signals subject to the chip-level reception beamforming to demodulate the user signals.

**6.** The receiver of claim 1, wherein the receiver is a terminal which receives a signal transmitted from the base station, in a communication system where the terminal and the base station are connected to each other through a multi-path channel.

**7.** A receiver which receives a signal through a multi-path channel using a plurality of antennas, the receiver comprising:

a despreading unit configured to perform matched filtering on a plurality of pre-rake combined signals received through the plurality of antennas, thereby demodulating a user signal; and
a beamforming unit configured to perform symbol-level reception beamforming with respect to the user signal by multiplying the user signal by a plurality of weight vectors corresponding to the respective antennas.

**8.** The receiver of claim 7, comprising:

a demultiplexing unit configured to extract a reference signal part and a user data part from the pre-rake combined signal received through the multi-path channel;
a reference signal generator configured to generate a reference signal that is synchronized with a reception signal on a (L-1)-th path among the pre-rake combined signals; and
a weight vector generator configured to generate the weight vectors using the reference signal part extracted by the demultiplexing unit and the reference signal generated by the reference signal generator, and to provide the weight vectors to the beamforming unit.

**9.** The receiver of claim 7, further comprising a channel estimator configured to extract the reference signal part from the signals subject to the symbol-level reception beamforming by the beamforming unit, and to estimate a channel using the extracted reference signal part and the reference signal generated by the reference signal generator.

**10.** The receiver of claim 7, being a base station which receives a signal transmitted from a terminal, in a communication system where the terminal and the base station are connected to each other through a multi-path channel, wherein if the receiver is a base station, the despreading unit is configured to perform matched filtering on the pre-rake combined signals received through the antennas and to demodulate a plurality of user signals, and the beamorming unit is configured to perform symbol-level reception beamforming with respect to the user signals by multiplying the user signals by the weight vectors corresponding to the respective antennas.

**11.** The receiver of claim 7, being a terminal which receives a signal received from the base station, in a communication system where the terminal and the base station are connected to each other through a multi-path channel.

**12.** A transmitter which transmits a signal using a plurality of antennas in a communication system, the transmitter comprising:

a spreading unit configured to spread-modulate a user signal using continuously orthogonal spreading codes having a characteristic of being continuously orthogonal for a predetermined time interval to generate a spreading signal;
a pre-rake combiner configured to perform pre-rake combining of the spreading signal and to generate a pre-rake combined signal; and
a beamforming unit configured to perform chip-level transmission beamforming by multiplying the pre-rake combined signal by a plurality of weight vectors corresponding to the respective antennas.

**13.** The transmitter of claim 12, further comprising a weight vector converter configured to provide the weight vectors that are provided to the beamforming unit,
wherein the weight vectors are decided by a receiver which receives a signal transmitted from the transmitter, and acquired from the receiver.

**14.** The transmitter of claim 12, wherein the continuously orthogonal spreading codes have an auto-correlation function value of 0 and a cross-correlation function value of 0 for a predetermined time period.

**15.** The transmitter of claim 12, being a base station which transmits a signal subject to the chip-level transmission beamforming to the terminal, in a communication system where the terminal and the base station are connected to each other through a multi-path channel,
wherein if the transmitter is a base station, the base station comprises the spreading unit, the pre-rake combiner, and the beamforming unit in correspondence to the number of users who exist in the communication system.

FIG. 1

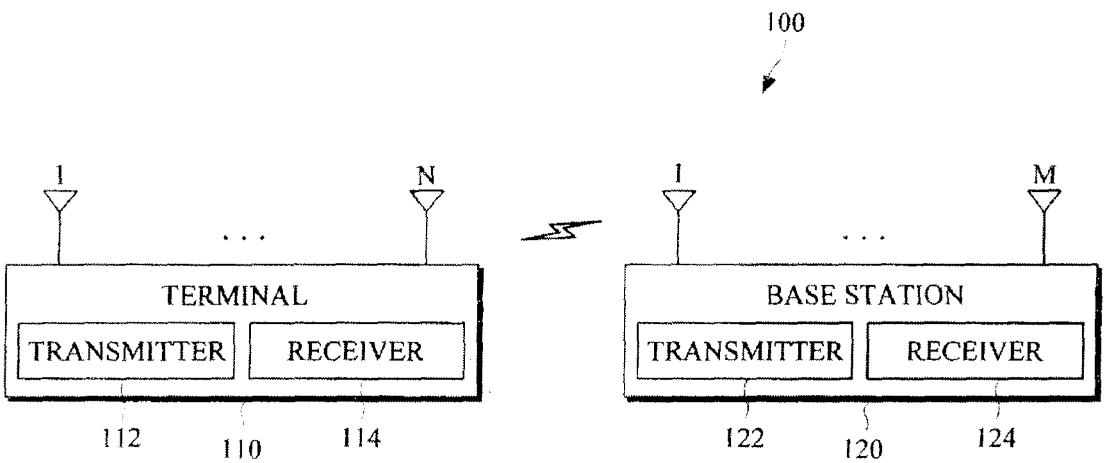
100
1
N
1
M
TERMINAL
TRANSMITTER
RECEIVER
BASE STATION
TRANSMITTER
RECEIVER
112
110
114
122
120
124

FIG. 2

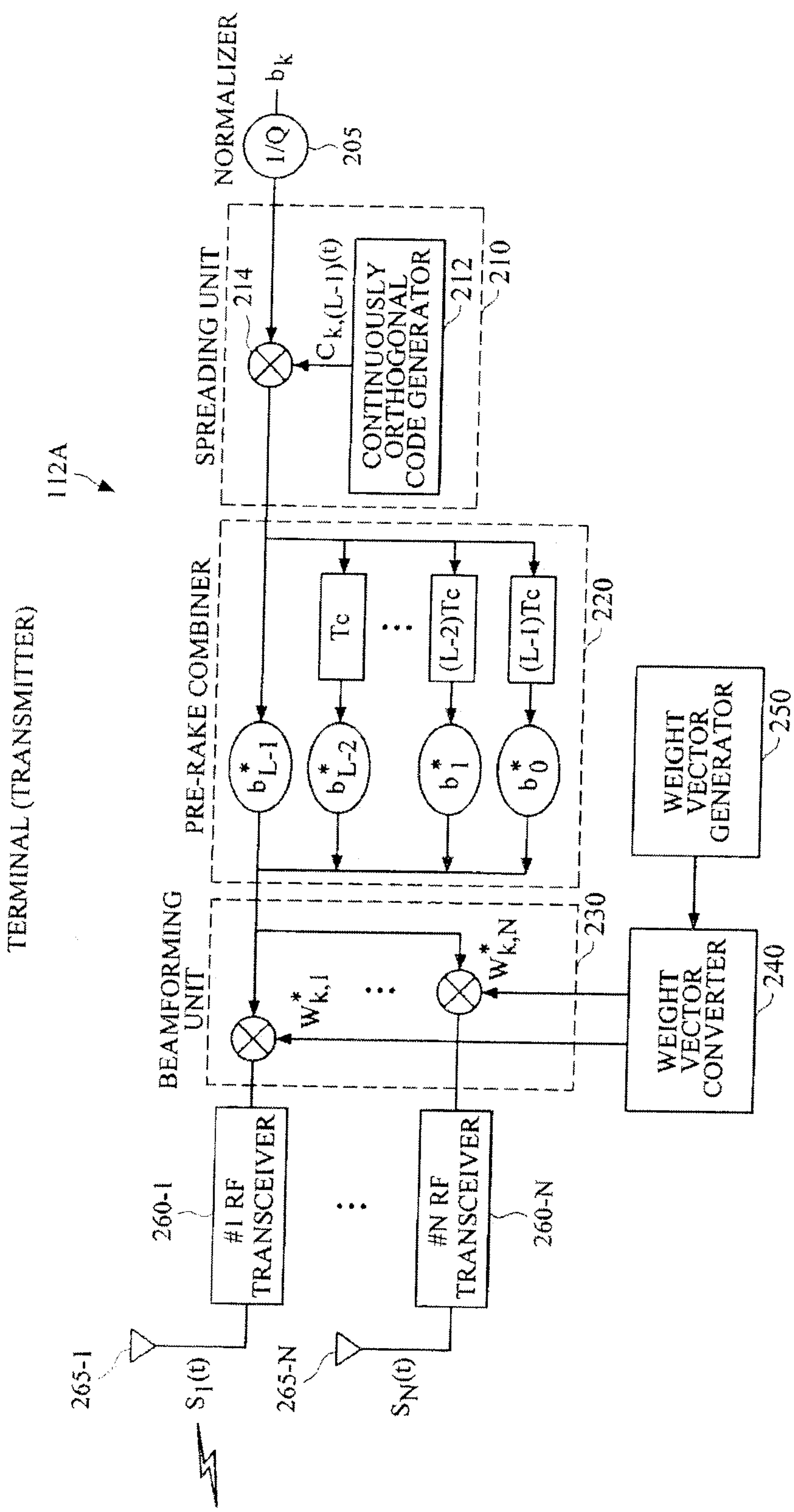
TERMINAL (TRANSMITTER)
112A
NORMALIZER
I/Q
b_k
205
SPREADING UNIT
214
C_k,(L-1)(t)
CONTINUOUSLY ORTHOGONAL CODE GENERATOR
212
210
PRE-RAKE COMBINER
Tc
(L-2)Tc
(L-1)Tc
b*_L-1
b*_L-2
b*_1
b*_0
220
BEAMFORMING UNIT
W*_k,1
W*_k,N
230
WEIGHT VECTOR GENERATOR
250
WEIGHT VECTOR CONVERTER
240
#1 RF TRANSCEIVER
260-1
#N RF TRANSCEIVER
260-N
265-1
S_1(t)
265-N
S_N(t)

FIG. 3

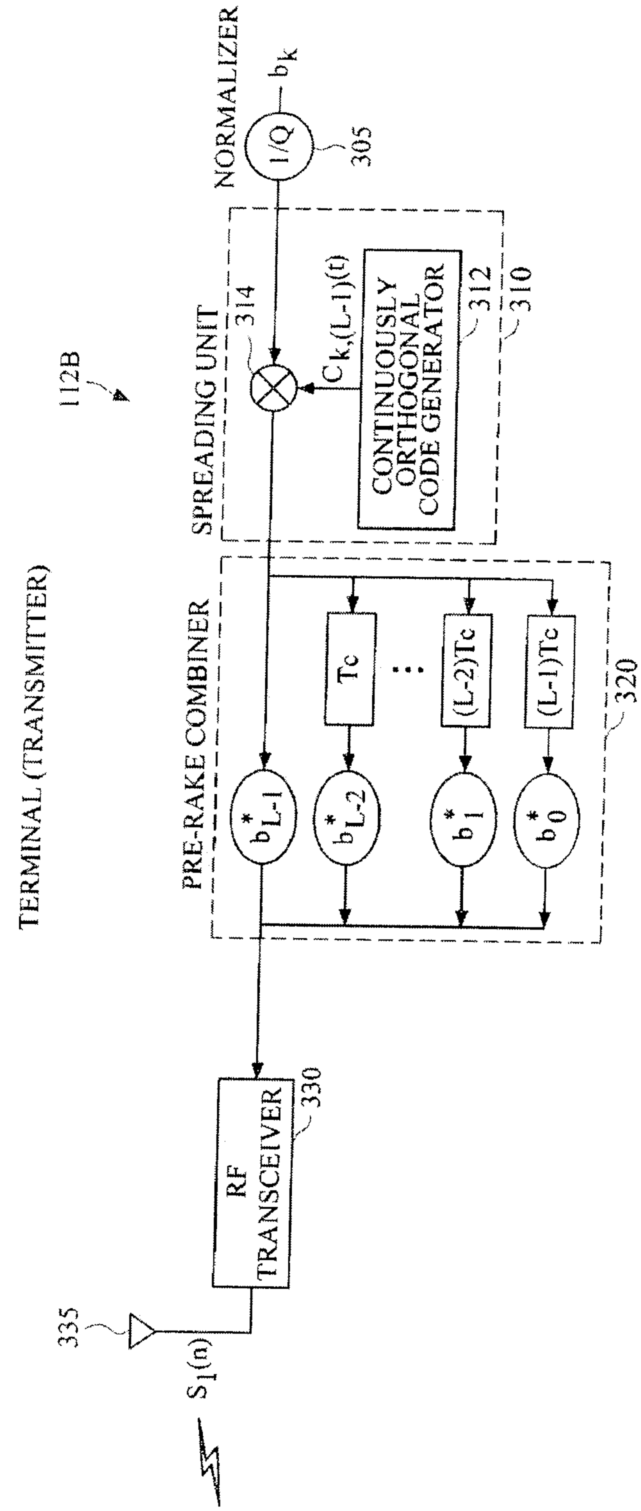
TERMINAL (TRANSMITTER)
112B
NORMALIZER
1/Q
305
b_k
SPREADING UNIT
314
C_k,(L-1)(t)
CONTINUOUSLY ORTHOGONAL CODE GENERATOR
312
310
PRE-RAKE COMBINER
Tc
(L-2)Tc
(L-1)Tc
b*_L-1
b*_L-2
b*_1
b*_0
320
RF TRANSCEIVER
330
335
S_1(n)

FIG. 4

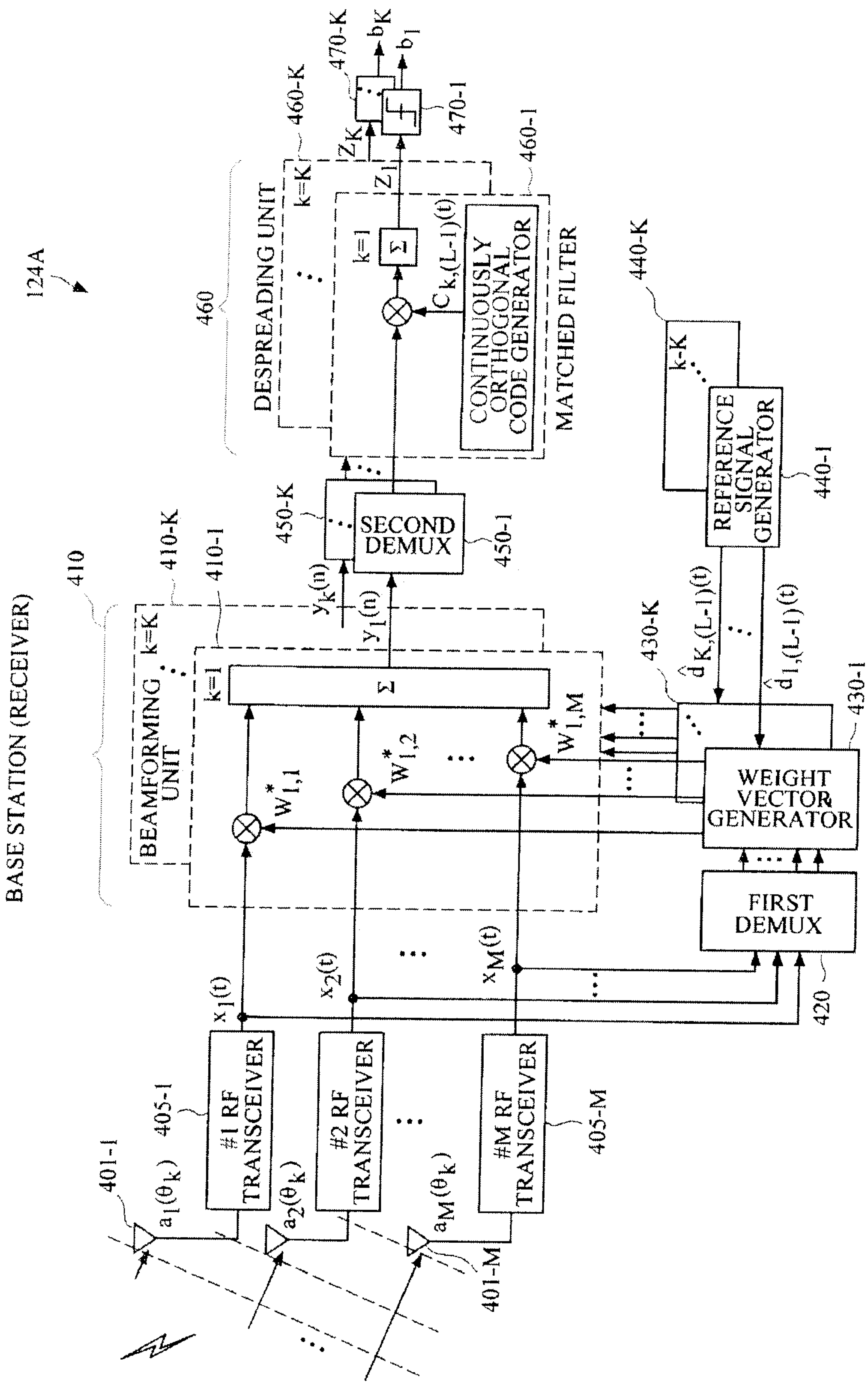
BASE STATION (RECEIVER)
124A
410
410-K
410-1
BEAMFORMING UNIT
k=K
k=1
#1 RF TRANSCEIVER
#2 RF TRANSCEIVER
#M RF TRANSCEIVER
401-1
401-M
405-1
405-M
420
FIRST DEMUX
WEIGHT VECTOR GENERATOR
430-1
430-K
REFERENCE SIGNAL GENERATOR
440-1
440-K
k-K
SECOND DEMUX
450-1
450-K
460
DESPREADING UNIT
460-1
460-K
CONTINUOUSLY ORTHOGONAL CODE GENERATOR
MATCHED FILTER
470-1
470-K

FIG. 5

BASE STATION (RECEIVER)

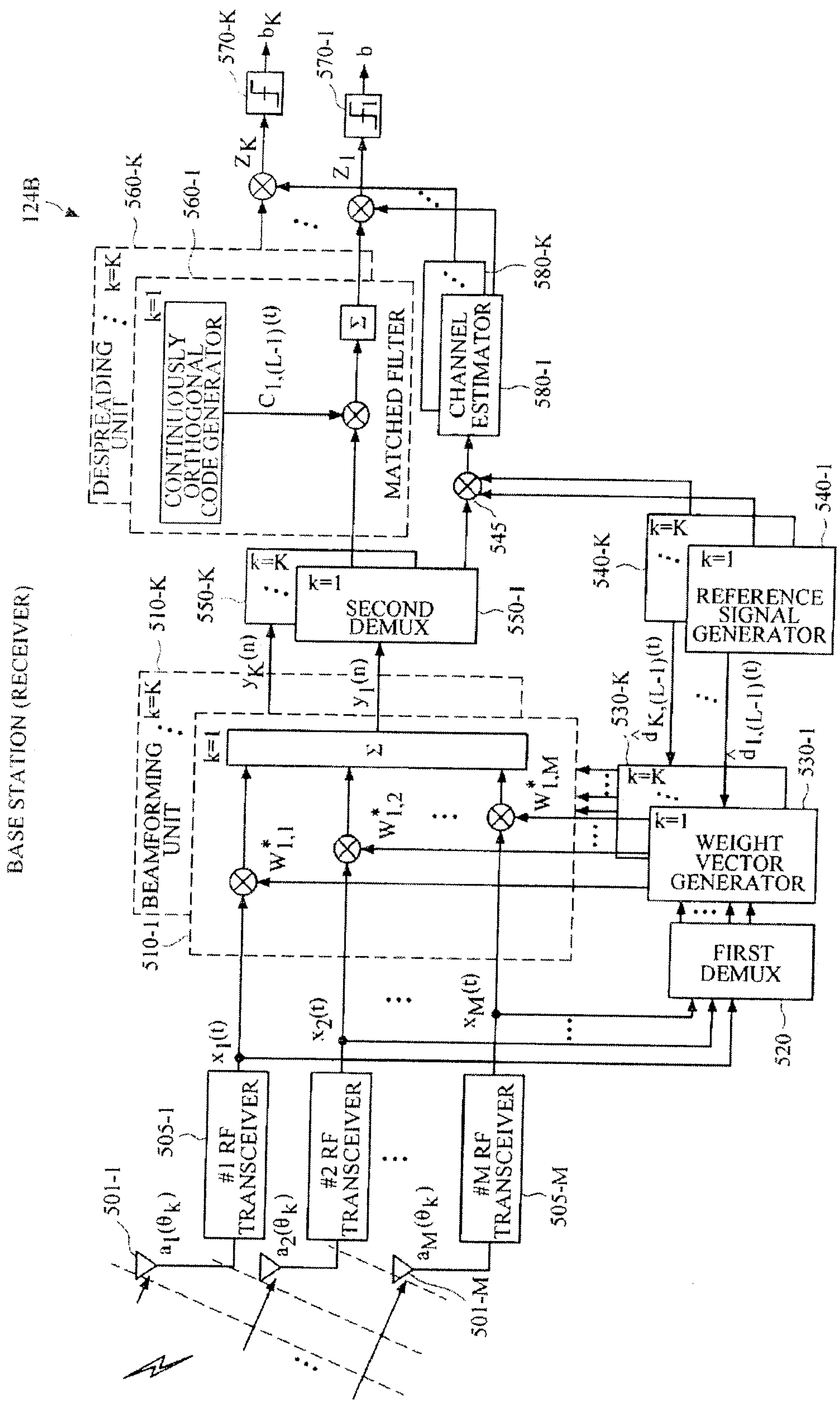

FIG. 6

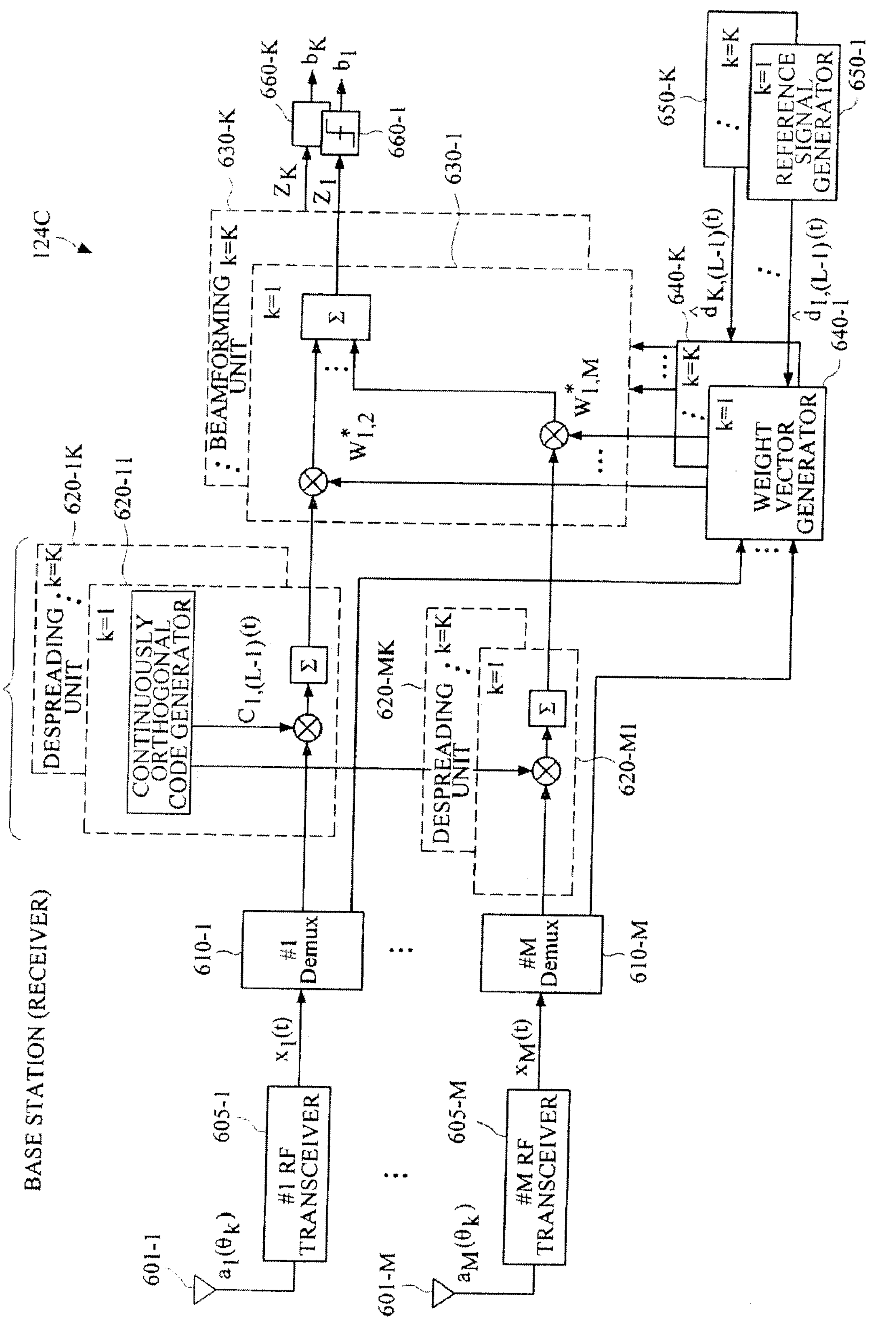
BASE STATION (RECEIVER)
124C
601-1
$a_1(\theta_k)$
605-1
#1 RF TRANSCEIVER
$x_1(t)$
610-1
#1 Demux
601-M
$a_M(\theta_k)$
605-M
#M RF TRANSCEIVER
$x_M(t)$
610-M
#M Demux
620
DESPREADING UNIT
k=K
k=1
620-1K
620-11
CONTINUOUSLY ORTHOGONAL CODE GENERATOR
$C_{1,(L-1)}(t)$
620-MK
620-M1
BEAMFORMING UNIT
630-K
630-1
$W^*_{1,2}$
$W^*_{1,M}$
$Z_K$
$Z_1$
660-K
660-1
$b_K$
$b_1$
WEIGHT VECTOR GENERATOR
640-K
640-1
$\hat{d}_{K,(L-1)}(t)$
$\hat{d}_{1,(L-1)}(t)$
650-K
650-1
REFERENCE SIGNAL GENERATOR

FIG. 7

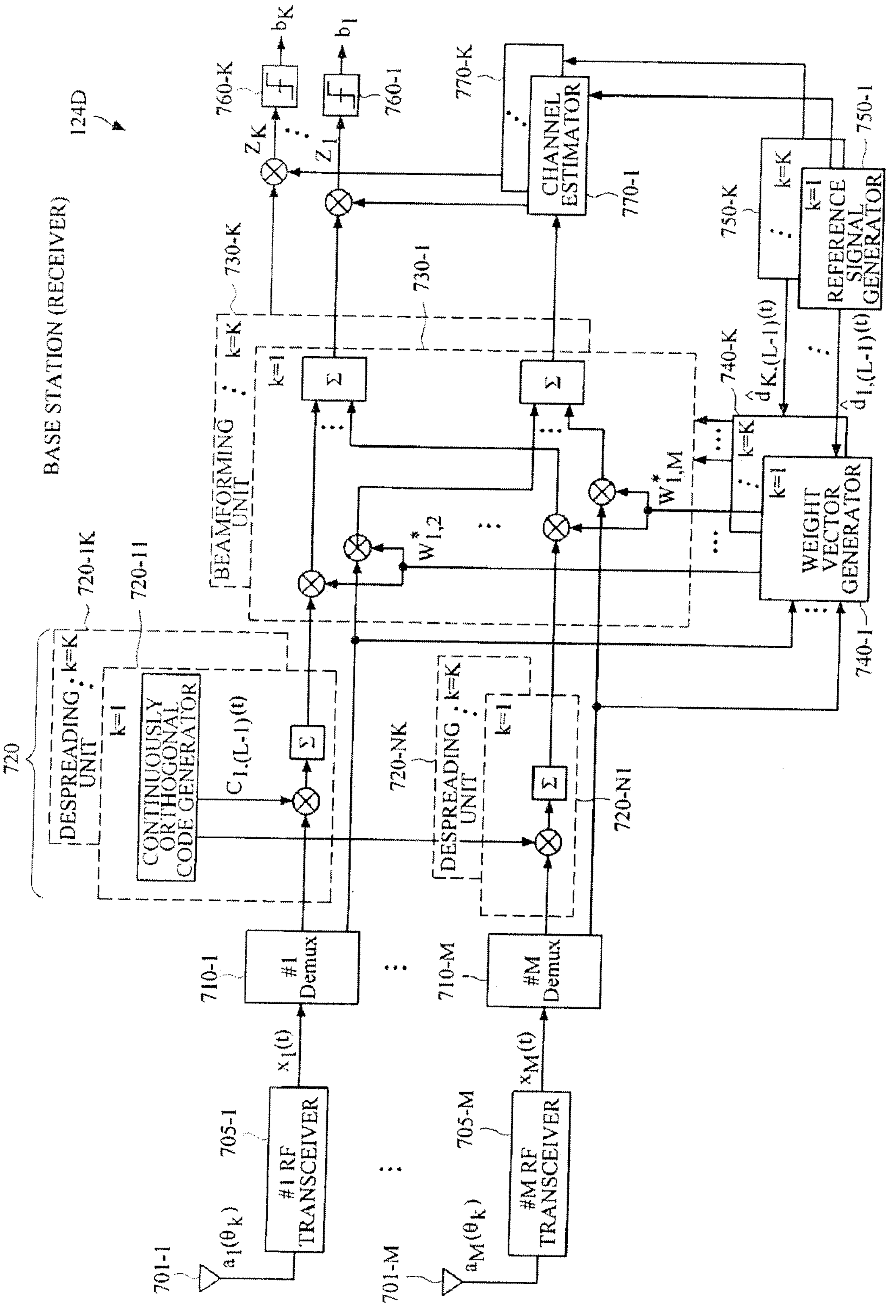

124D
BASE STATION (RECEIVER)
701-1
$a_1(\theta_k)$
705-1
#1 RF TRANSCEIVER
$x_1(t)$
710-1
#1 Demux
701-M
$a_M(\theta_k)$
705-M
#M RF TRANSCEIVER
$x_M(t)$
710-M
#M Demux
720
DESPREADING UNIT
k=K
k=1
720-1K
720-11
CONTINUOUSLY ORTHOGONAL CODE GENERATOR
$C_{1,(L-1)}(t)$
Σ
720-NK
720-N1
BEAMFORMING UNIT
730-K
730-1
$W^*_{1,2}$
$W^*_{1,M}$
WEIGHT VECTOR GENERATOR
740-1
740-K
$\hat{d}_{K,(L-1)}(t)$
$\hat{d}_{1,(L-1)}(t)$
750-K
750-1
REFERENCE SIGNAL GENERATOR
CHANNEL ESTIMATOR
770-1
770-K
$Z_K$
$Z_1$
760-K
760-1
$b_K$
$b_1$

FIG. 8

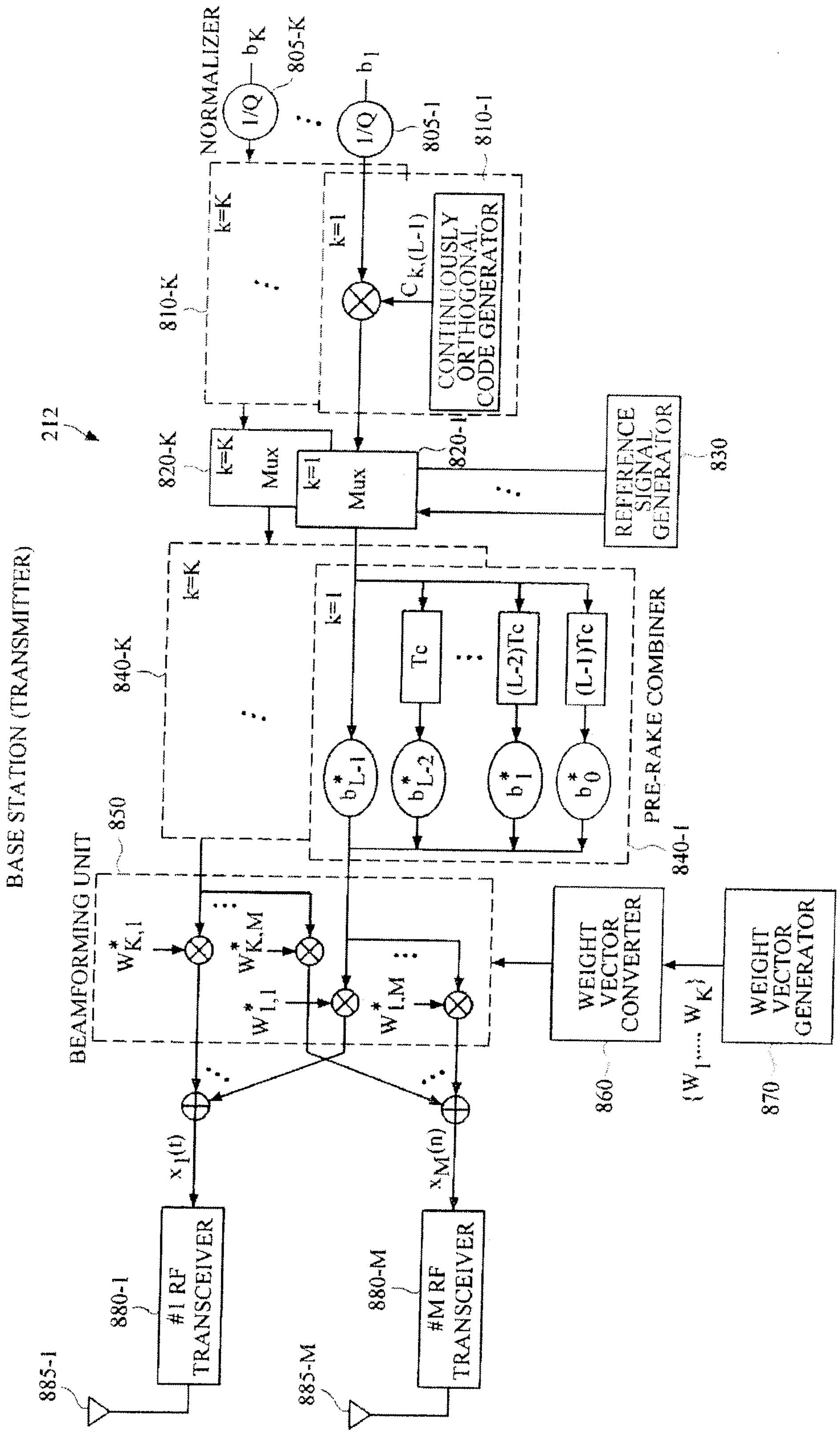
BASE STATION (TRANSMITTER)
212
NORMALIZER
I/Q
$b_K$
805-K
I/Q
$b_1$
805-1
810-1
810-K
k=K
k=1
$C_{k,(L-1)}$
CONTINUOUSLY ORTHOGONAL CODE GENERATOR
820-K
k=K
Mux
k=1
Mux
820-1
REFERENCE SIGNAL GENERATOR
830
840-K
k=K
k=1
Tc
(L-2)Tc
(L-1)Tc
$b^*_{L-1}$
$b^*_{L-2}$
$b^*_1$
$b^*_0$
PRE-RAKE COMBINER
840-1
850
BEAMFORMING UNIT
$W^*_{K,1}$
$W^*_{K,M}$
$W^*_{1,1}$
$W^*_{1,M}$
WEIGHT VECTOR CONVERTER
860
$\{W_1, \ldots, W_K\}$
WEIGHT VECTOR GENERATOR
870
$x_1(t)$
$x_M(n)$
880-1
#1 RF TRANSCEIVER
880-M
#M RF TRANSCEIVER
885-1
885-M

FIG. 9

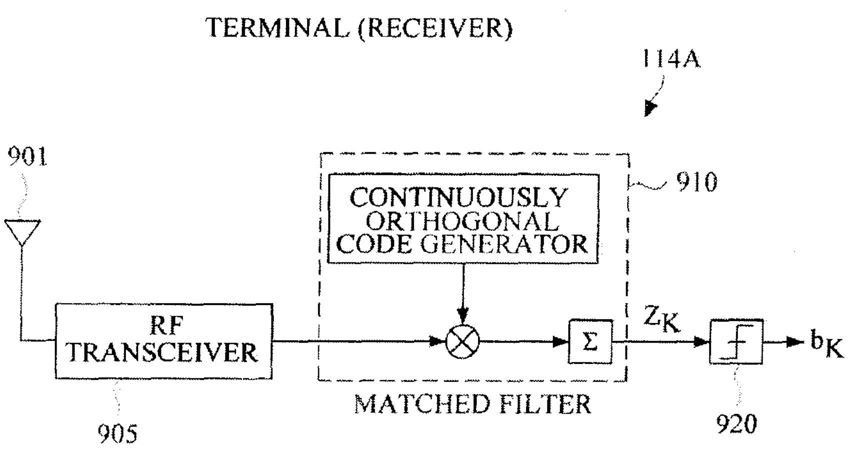
TERMINAL (RECEIVER)
114A
901
910
CONTINUOUSLY ORTHOGONAL CODE GENERATOR
RF TRANSCEIVER
Σ
Z_K
b_K
MATCHED FILTER
905
920

FIG. 10

TERMINAL (RECEIVER)

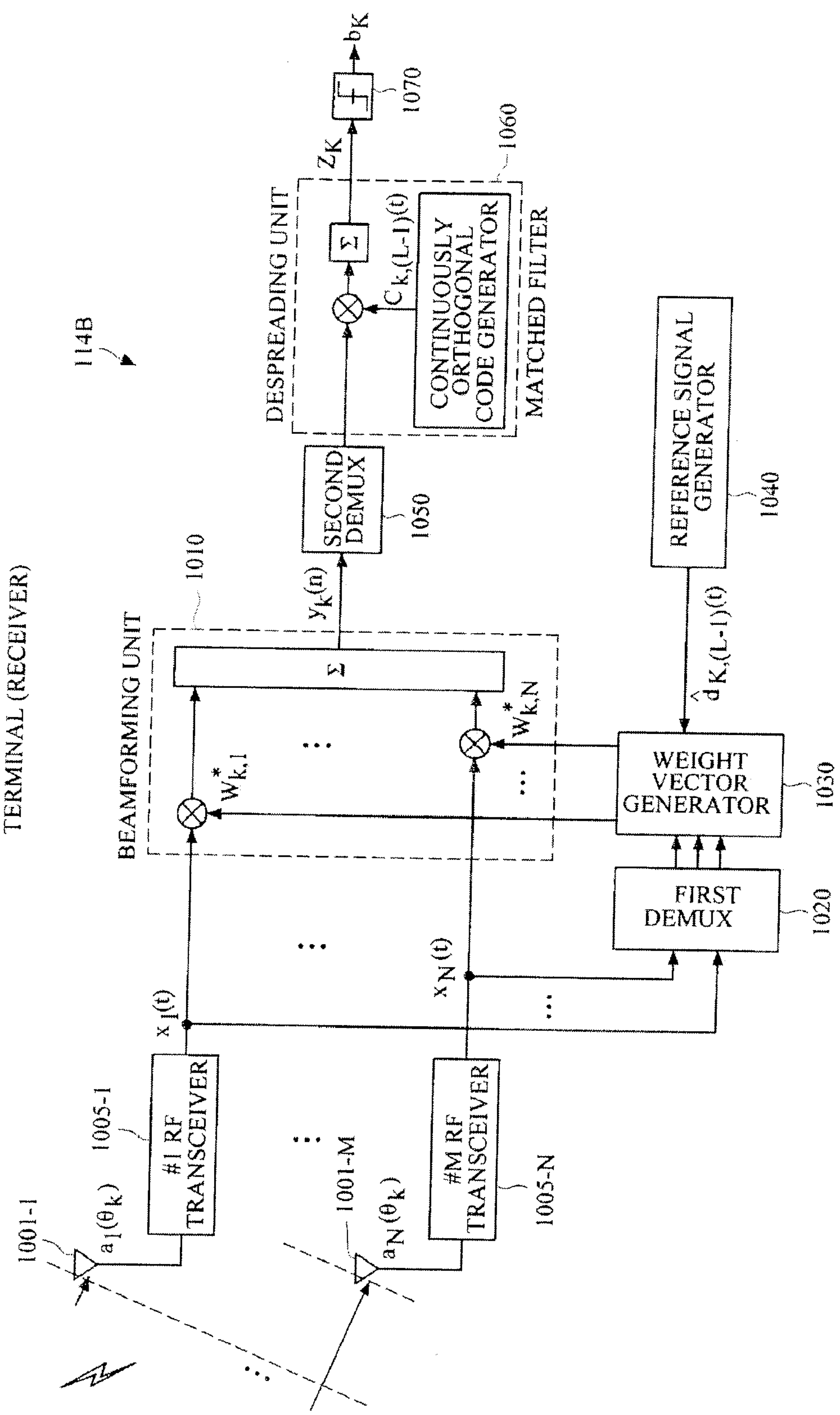

FIG. 11

TERMINAL (RECEIVER)

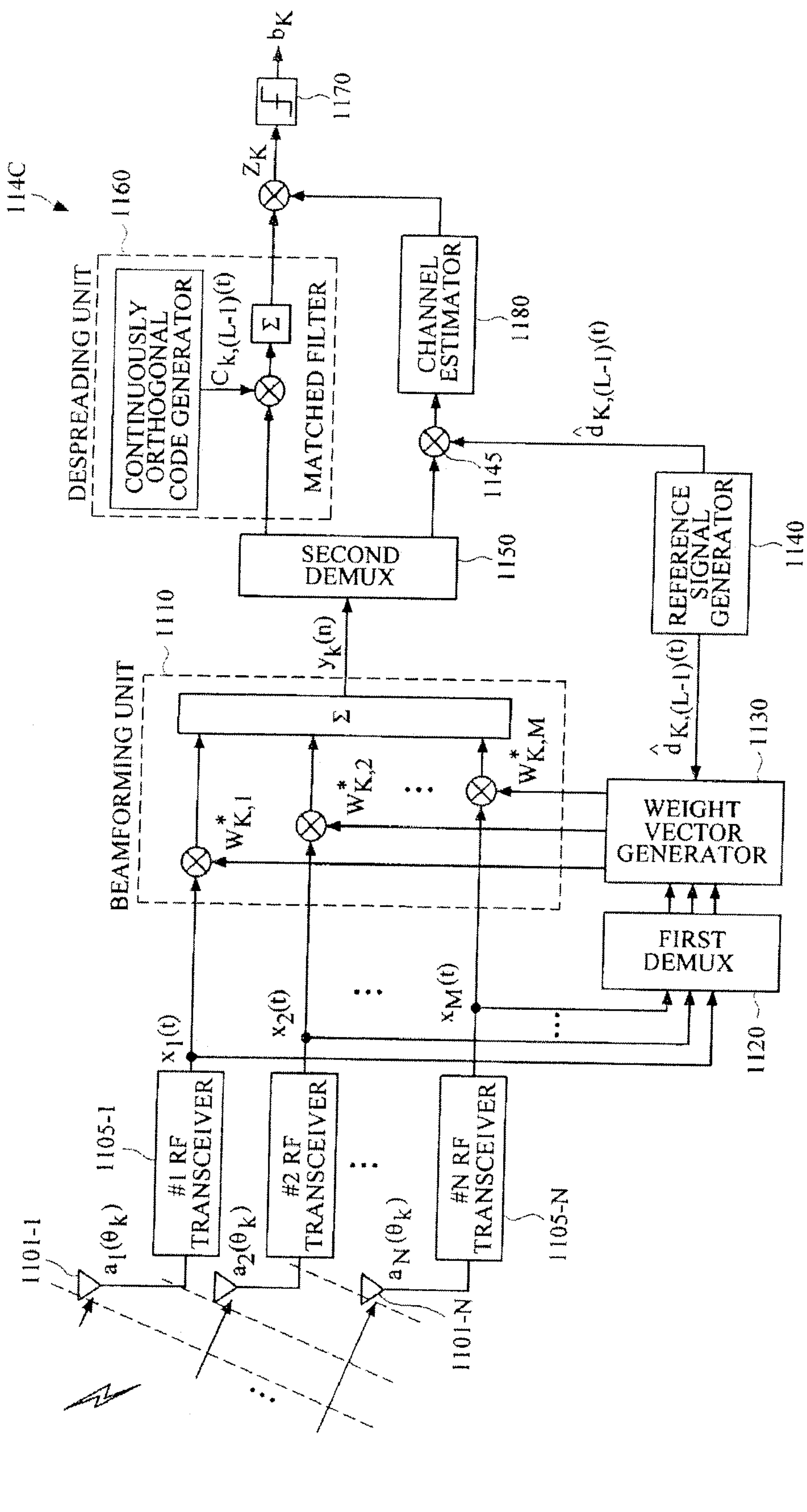

FIG. 12

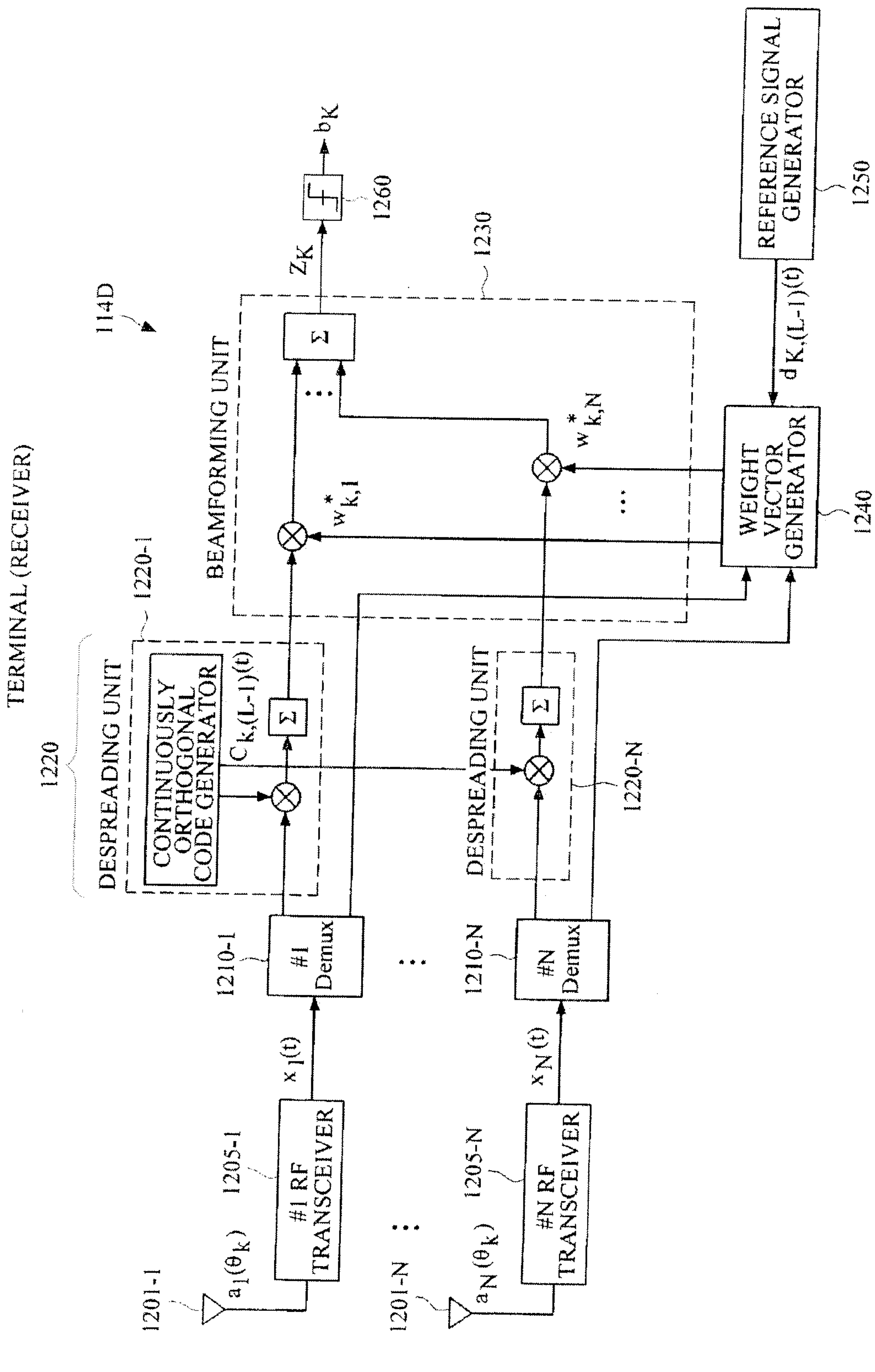
TERMINAL (RECEIVER)
114D
1201-1
$a_1(\theta_k)$
1205-1
#1 RF TRANSCEIVER
$x_1(t)$
1210-1
#1 Demux
1201-N
$a_N(\theta_k)$
1205-N
#N RF TRANSCEIVER
$x_N(t)$
1210-N
#N Demux
1220
DESPREADING UNIT
1220-1
CONTINUOUSLY ORTHOGONAL CODE GENERATOR
$C_{k,(L-1)}(t)$
Σ
DESPREADING UNIT
1220-N
BEAMFORMING UNIT
1230
$w^*_{k,1}$
$w^*_{k,N}$
Σ
$Z_K$
1260
$b_K$
WEIGHT VECTOR GENERATOR
1240
$d_{K,(L-1)}(t)$
REFERENCE SIGNAL GENERATOR
1250

FIG. 13

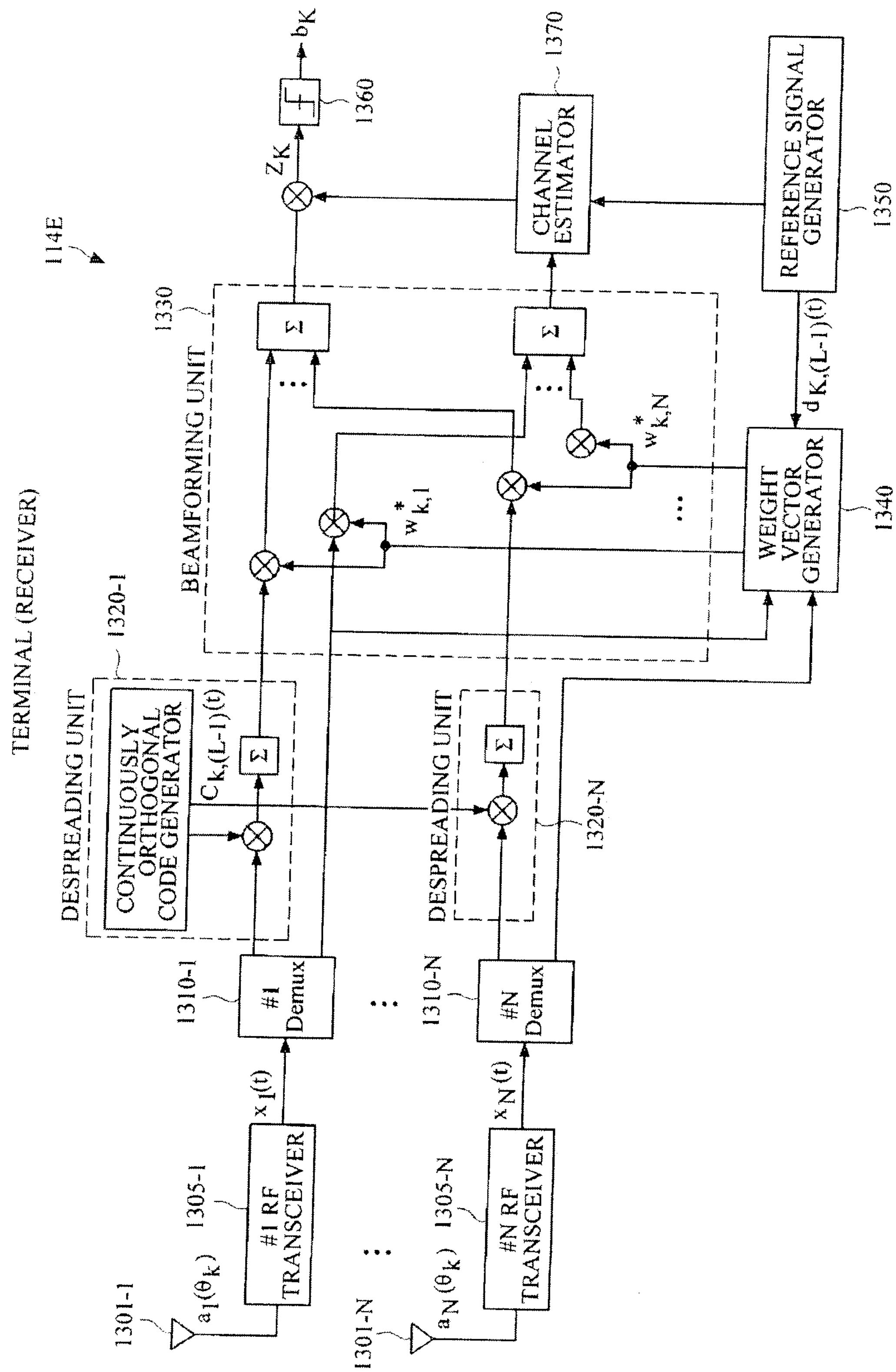
TERMINAL (RECEIVER)
114E
1301-1
$a_1(\theta_k)$
1305-1
#1 RF TRANSCEIVER
$x_1(t)$
1310-1
#1 Demux
1301-N
$a_N(\theta_k)$
1305-N
#N RF TRANSCEIVER
$x_N(t)$
1310-N
#N Demux
1320-1
DESPREADING UNIT
CONTINUOUSLY ORTHOGONAL CODE GENERATOR
$C_{k,(L-1)}(t)$
Σ
DESPREADING UNIT
1320-N
BEAMFORMING UNIT
1330
$w^*_{k,1}$
$w^*_{k,N}$
WEIGHT VECTOR GENERATOR
1340
REFERENCE SIGNAL GENERATOR
1350
$d_{K,(L-1)}(t)$
CHANNEL ESTIMATOR
1370
$Z_K$
1360
$b_K$

FIG. 14

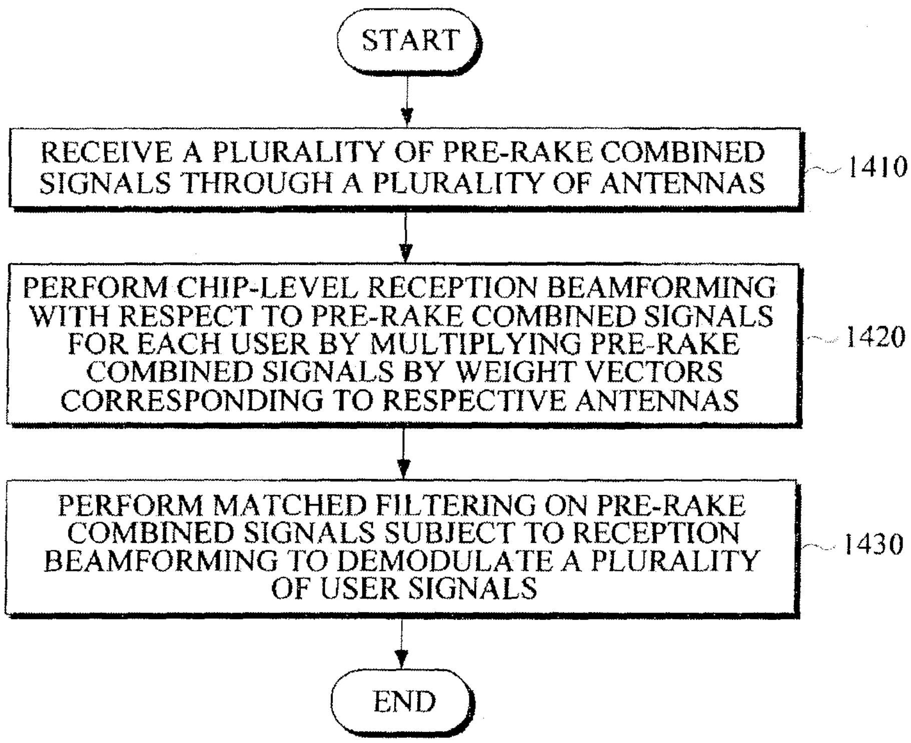
START
RECEIVE A PLURALITY OF PRE-RAKE COMBINED SIGNALS THROUGH A PLURALITY OF ANTENNAS
1410
PERFORM CHIP-LEVEL RECEPTION BEAMFORMING WITH RESPECT TO PRE-RAKE COMBINED SIGNALS FOR EACH USER BY MULTIPLYING PRE-RAKE COMBINED SIGNALS BY WEIGHT VECTORS CORRESPONDING TO RESPECTIVE ANTENNAS
1420
PERFORM MATCHED FILTERING ON PRE-RAKE COMBINED SIGNALS SUBJECT TO RECEPTION BEAMFORMING TO DEMODULATE A PLURALITY OF USER SIGNALS
1430
END

FIG. 15

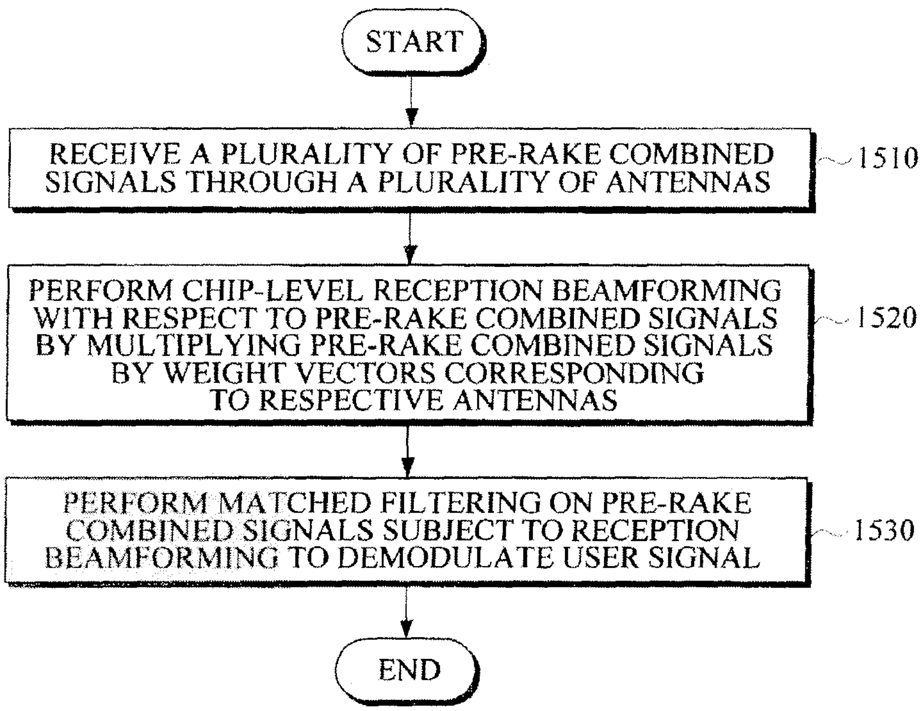
START
RECEIVE A PLURALITY OF PRE-RAKE COMBINED SIGNALS THROUGH A PLURALITY OF ANTENNAS
1510
PERFORM CHIP-LEVEL RECEPTION BEAMFORMING WITH RESPECT TO PRE-RAKE COMBINED SIGNALS BY MULTIPLYING PRE-RAKE COMBINED SIGNALS BY WEIGHT VECTORS CORRESPONDING TO RESPECTIVE ANTENNAS
1520
PERFORM MATCHED FILTERING ON PRE-RAKE COMBINED SIGNALS SUBJECT TO RECEPTION BEAMFORMING TO DEMODULATE USER SIGNAL
1530
END

FIG. 16

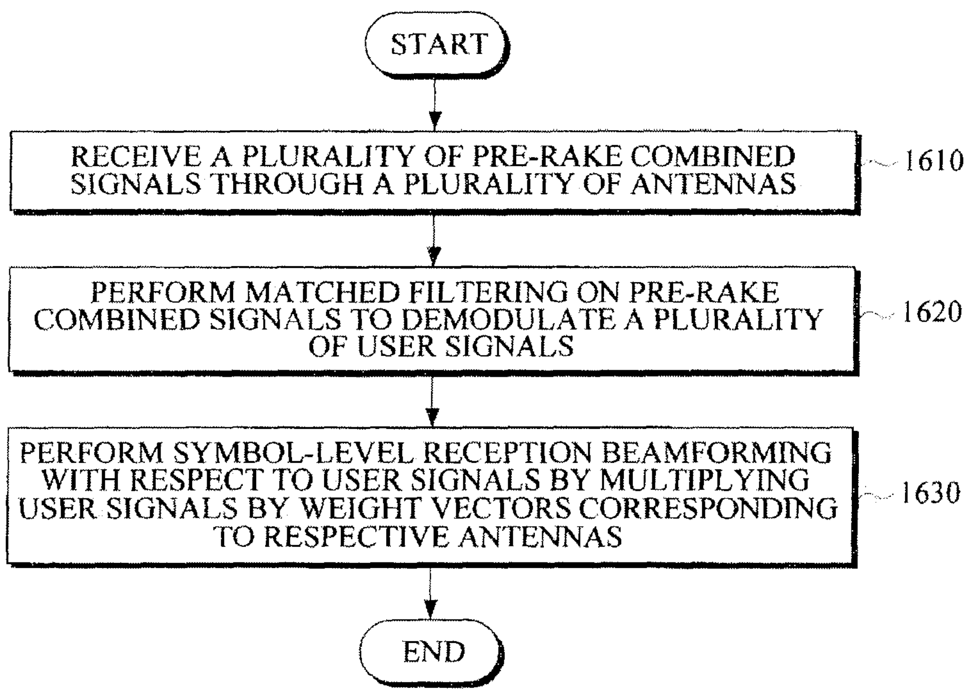
START
RECEIVE A PLURALITY OF PRE-RAKE COMBINED SIGNALS THROUGH A PLURALITY OF ANTENNAS
1610
PERFORM MATCHED FILTERING ON PRE-RAKE COMBINED SIGNALS TO DEMODULATE A PLURALITY OF USER SIGNALS
1620
PERFORM SYMBOL-LEVEL RECEPTION BEAMFORMING WITH RESPECT TO USER SIGNALS BY MULTIPLYING USER SIGNALS BY WEIGHT VECTORS CORRESPONDING TO RESPECTIVE ANTENNAS
1630
END

FIG. 17

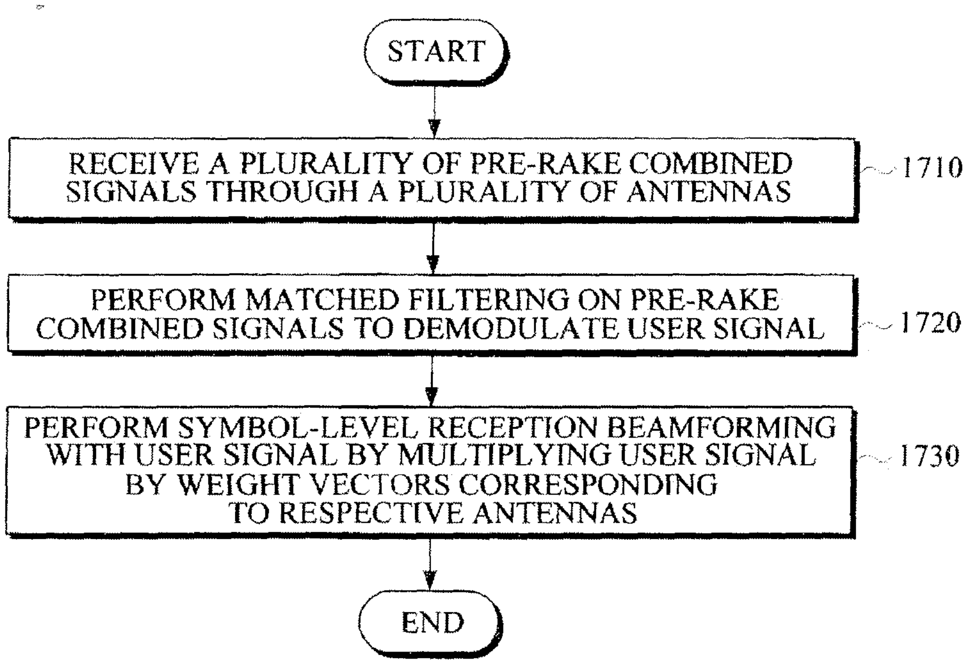
START
RECEIVE A PLURALITY OF PRE-RAKE COMBINED SIGNALS THROUGH A PLURALITY OF ANTENNAS
1710
PERFORM MATCHED FILTERING ON PRE-RAKE COMBINED SIGNALS TO DEMODULATE USER SIGNAL
1720
PERFORM SYMBOL-LEVEL RECEPTION BEAMFORMING WITH USER SIGNAL BY MULTIPLYING USER SIGNAL BY WEIGHT VECTORS CORRESPONDING TO RESPECTIVE ANTENNAS
1730
END

FIG. 18

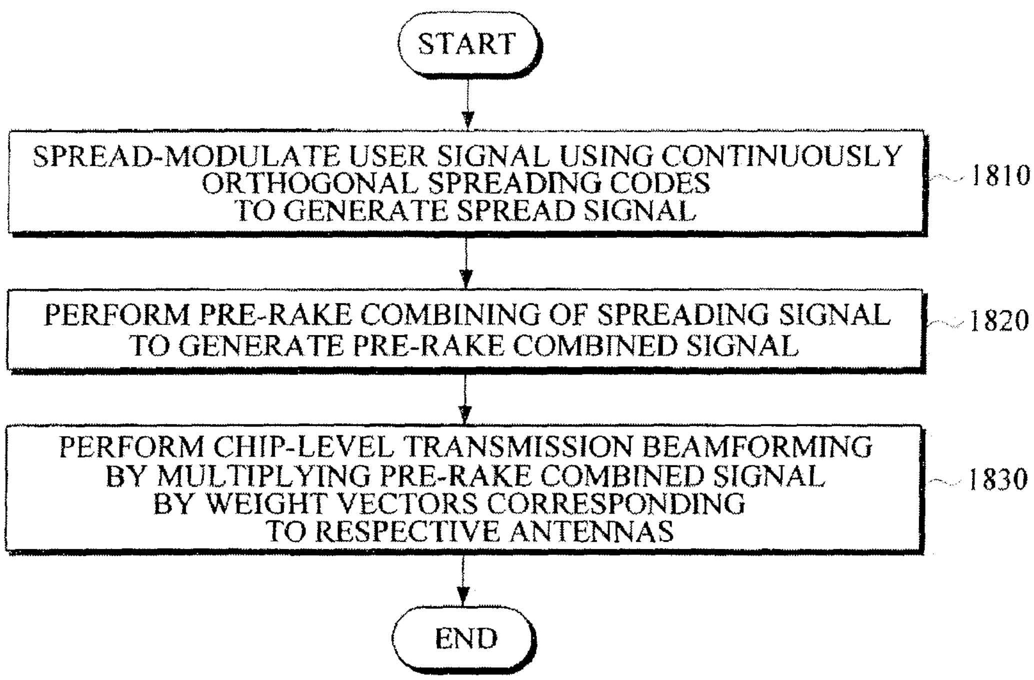
START
SPREAD-MODULATE USER SIGNAL USING CONTINUOUSLY ORTHOGONAL SPREADING CODES TO GENERATE SPREAD SIGNAL
1810
PERFORM PRE-RAKE COMBINING OF SPREADING SIGNAL TO GENERATE PRE-RAKE COMBINED SIGNAL
1820
PERFORM CHIP-LEVEL TRANSMISSION BEAMFORMING BY MULTIPLYING PRE-RAKE COMBINED SIGNAL BY WEIGHT VECTORS CORRESPONDING TO RESPECTIVE ANTENNAS
1830
END

FIG. 19

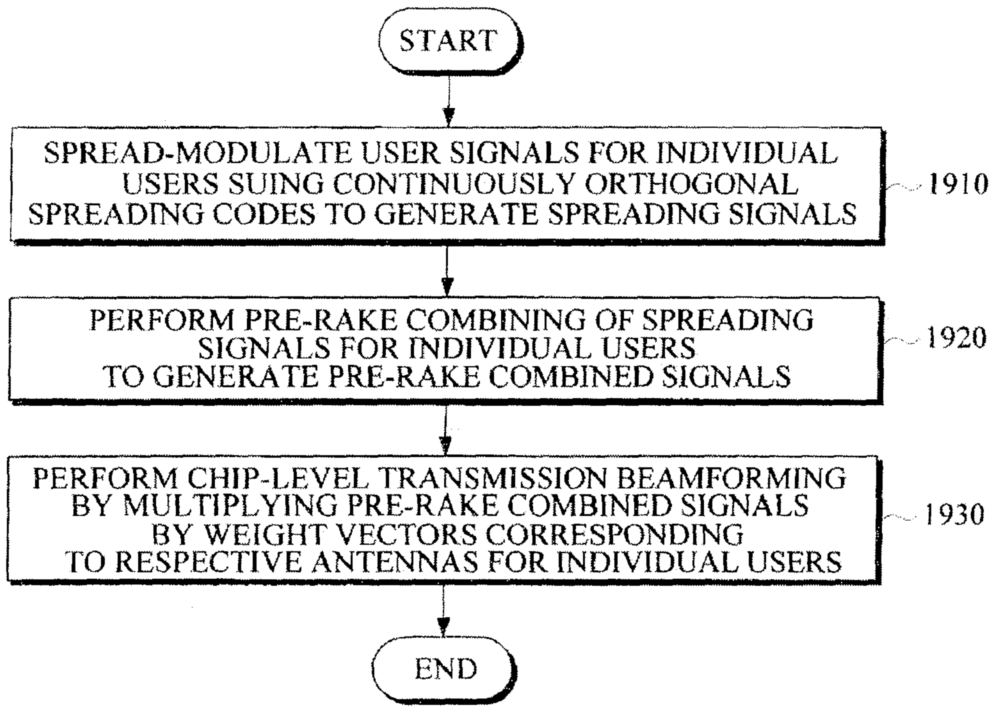
START
SPREAD-MODULATE USER SIGNALS FOR INDIVIDUAL USERS SUING CONTINUOUSLY ORTHOGONAL SPREADING CODES TO GENERATE SPREADING SIGNALS
1910
PERFORM PRE-RAKE COMBINING OF SPREADING SIGNALS FOR INDIVIDUAL USERS TO GENERATE PRE-RAKE COMBINED SIGNALS
1920
PERFORM CHIP-LEVEL TRANSMISSION BEAMFORMING BY MULTIPLYING PRE-RAKE COMBINED SIGNALS BY WEIGHT VECTORS CORRESPONDING TO RESPECTIVE ANTENNAS FOR INDIVIDUAL USERS
1930
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020100100514
- KR 1020110104946
- KR 1020070042510